# EUROPEAN PATENT SPECIFICATION

(11) **EP 4 092 965 B1**
(45) Date of publication and mention of the grant of the patent: **11.11.2026**
(21) Application number: 20921362.8
(22) Date of filing: 18.09.2020
(51) Int. Cl.: H04L 43/02

(54) **METHOD AND DEVICE FOR NETWORK PERFORMANCE DETECTION, AND NETWORK DEVICE**
VERFAHREN UND VORRICHTUNG ZUR NETZWERKLEISTUNGSDETEKTION UND NETZWERKVORRICHTUNG
PROCÉDÉ ET DISPOSITIF DE DÉTECTION DES PERFORMANCES D'UN RÉSEAU ET DISPOSITIF DE RÉSEAU

(30) Priority: 29.02.2020 CN 202010132229
(43) Date of publication of application: 23.11.2022
(73) Proprietor: Huawei Technologies Co., Ltd., Shenzhen, Guangdong 518129 (CN)
(72) Inventor: DING, Shanming, Shenzhen, Guangdong 518129 (CN); ZHOU, Tianran, Shenzhen, Guangdong 518129 (CN)
(74) Representative: Maiwald GmbH
(86) International application number: PCT/CN2020/116229
(87) International publication number: WO 2021/169256

(56) References cited:
- WO-A1-2019/233179
- CN-A- 109 495 352
- CN-A- 109 525 451
- CN-A- 109 639 534
- CN-A- 110 572 293
- US-A1- 2015 081 827
- SONG H ET AL: "In-situ Flow Information Telemetry; draft-song-opsawg-ifit-framework-07.txt", no. 7, 4 November 2019 (2019-11-04), pages 1 - 19, XP015136377, Retrieved from the Internet <URL:https://tools.ietf.org/html/draft-song-opsawg-ifit-framework-07> [retrieved on 20191104]

## Description

This application claims priority to Chinese Patent Application No. 202010132229.6 on February 29, 2020 and entitled "NETWORK PERFORMANCE DETECTION METHOD AND APPARATUS, AND NETWORK DEVICE".

### TECHNICAL FIELD

This application relates to the field of communication technologies, and in particular, to a network performance detection method and apparatus, and a network device.

### BACKGROUND

Currently, 5G applications based on 5G communications technologies have been widely used in various fields, enriching life of people. The 5G applications pose higher requirements on application scenarios requiring ultrahigh bandwidth, ultra-large connections, an ultra-low latency, or the like. The 5G applications need to provide a service flow-based, real-time, and high-precision network performance detection mechanism for accurately feeding back actual traffic of a user. In this way, a service flow network topology, end-to-end and hop-by-hop throughputs, a packet loss, a delay, a jitter, and the like can be visualized to improve 5G communication quality.
International patent application WO 2019/233179 A1 discloses a data packet detection method, including: receiving, by a first network device, first control information sent by a controller; receiving, by the first network device, a first data packet sent by a previous-hop network device of the first network device; determining, by the first network device based on first collection information, first collected data; updating, by the first network device, a first detection node identifier; and sending, by the first network device to a next-hop network device of the first network device, a first data packet carrying the updated first detection information.
The article "In-situ Flow Information Telemetry" by H. Song et al. (Internet Engineering Task Force) discloses an In-situ Flow Information Telemetry (iFIT) reference framework.

In a related technology, the network performance detection mechanism may be implemented by using an in-situ flow information telemetry (in-situ flow information telemetry, IFIT) protocol, and the network performance detection mechanism implemented by using the IFIT protocol includes two modes: an end-to-end mode and a hop-by-hop mode. In the end-to-end mode, an ingress node device and an egress node device on a transmission link of a data flow each may collect statistics about detection data in a period in a process of transmitting the data flow; and separately encapsulate the detection data in the period into a detection packet and report the detection packet to a control device after the period ends. In the hop-by-hop mode, an ingress node device, an intermediate node device, and an egress node device each collect statistics about detection data in a period in a process of transmitting a data flow; and separately encapsulate the detection data in the period into a detection packet and report the detection packet to a control device after the period ends. After receiving a detection packet reported by each network device on the transmission link, the control device performs data analysis, including calculation of a throughput, a packet loss, a delay, a jitter, and the like.

For the foregoing two modes, many detection packets are reported to the control device, which consumes bandwidth. In addition, the control device also needs to process many detection packets, which decreases a processing capability of the control device.

### SUMMARY

This application provides a network performance detection method and apparatus, and a network device, to reduce a quantity of packets reported for network performance detection, reduce consumed bandwidth, and improve a processing capability of a control device. The technical solutions are as follows:

According to a first aspect, a network performance detection method is provided. The method includes:

A first network device obtains a first IFIT detection packet, where the first IFIT detection packet includes a first IFIT header, the first IFIT header includes reporting manner indication information, and the reporting manner indication information indicates that a detection result is reported by an egress node device. The first network device provides a second IFIT detection packet, where the second IFIT detection packet is a detection packet obtained by adding a first device identifier and a first data flow detection result to the first IFIT detection packet, the first device identifier is an identifier of the first network device, and the first data flow detection result is a detection result obtained by the first network device by detecting a first data flow in a first period. The first network device processes the second IFIT detection packet.

In this application, network performance detection is mainly divided into two phases. A first phase is a data packet transmission phase, and a second phase is an IFIT detection packet transmission phase. In the first phase, the first network device needs to detect a transmitted data packet in the first period, to obtain a detection result. In the second phase, the first network device needs to add the detection result to an IFIT detection packet for transmission.

To be specific, in the second stage, the first network device may obtain the first IFIT detection packet, and add the first network identifier and the first data flow detection result to the first IFIT detection packet, to obtain the second IFIT detection packet. In the first stage, that is, before the first network device provides the second IFIT detection packet, the method further includes: The first network device obtains a first data packet, where the first data packet includes a second IFIT header, the second IFIT header includes a detection task type, and the first data packet is a packet in the first data flow transmitted by the first network device in the first period. The first network device detects the first data packet based on the detection task type, to obtain a first packet detection result. The first network device determines the first data flow detection result based on the first packet detection result.

In this application, the first network device may be an ingress node device, an intermediate node device, or the egress node device. The following describes the first phase.

When the first network device is the ingress node device, the first network device may perform timing on a period length of the first period. In a timing process, before the first network device obtains the first data packet, the first network device may receive a second data packet that belongs to the first data flow and that is sent by a source end device. The first network device provides the first data packet. To be specific, the first network device sets the second IFIT header based on a stored IFIT detection task, and adds the second IFIT header to the second data packet, to obtain the first data packet. Then, the first network device may detect the first data packet based on the detection task type in the second IFIT header, to obtain the first packet detection result. Then, the first network device may store the first packet detection result, and send the first data packet to a next-hop network device of the first network device. In some embodiments, the IFIT detection task stored in the first network device may be delivered by a control device. In other words, before IFIT detection is performed, the control device may deliver the IFIT detection task to the first network device.

When the first network device is the intermediate node device, the first data packet obtained by the first network device is a data packet sent by a previous-hop network device of the first network device. In other words, the first network device may receive the first data packet sent by the previous-hop network device of the first network device. The first network device may determine the detection task type from the second IFIT header included in the first data packet, and therefore detect the first data packet based on the detection task type, to obtain the first packet detection result. The first network device stores the first packet detection result, and sends the first data packet to a next-hop network device of the first network device.

When the first network device is the egress node device, the first data packet obtained by the first network device is a data packet sent by a previous-hop network device of the first network device. In other words, the first network device may receive the first data packet sent by the previous-hop network device of the first network device. The first network device may determine the detection task type from the second IFIT header included in the first data packet, and therefore detect the first data packet based on the detection task type, to obtain the first packet detection result. The first network device stores the first packet detection result, parses out the second IFIT header from the first data packet to obtain a second data packet, and sends the second data packet to a destination end device. In other words, the second IFIT header in the first data packet is stripped to obtain the second data packet, and the second data packet is sent to the destination end device.

After the data packet is transmitted according to the foregoing method and IFIT detection is performed in a process of transmitting the data packet, the first network device may transmit the detection result according to the following method, that is, enter the second phase after the first period ends. The following describes the second phase.

Optionally, the first network device is the ingress node device, and the first IFIT detection packet is a detection packet generated by the first network device after the first period ends, or the first IFIT detection packet is a detection packet generated after the first network device receives a retransmission request sent by the control device, where the retransmission request is sent when the control device does not receive the first data flow detection result. In other words, the ingress node device may generate the first IFIT detection packet after the first period ends, or may generate the first IFIT detection packet after receiving the retransmission request sent by the control device.

It should be noted that, in the solution provided in this application, the egress node device reports the first data flow detection result in the first period to the control device. If determining that the first data flow detection result in the first period is not received, the control device may send the retransmission request to the ingress node device. After receiving the retransmission request, the ingress node device may respond to the retransmission request, query a locally stored detection result, and regenerate the first IFIT detection packet. The retransmission request may include an identifier of the ingress node device, a flow identifier of the first data flow, and a period identifier of the first period.

Optionally, when the first network device is the ingress node device, that the first network device processes the second IFIT detection packet includes: The first network device sends the second IFIT detection packet to a second network device, where the second network device is a next-hop network device of the first network device.

Optionally, the first network device is the intermediate node device, the first IFIT detection packet further includes a second device identifier and a second data flow detection result, the second device identifier is an identifier of a second network device, the second network device is a previous-hop network device of the first network device, and the second data flow detection result is a detection result obtained by the second network device by detecting the first data flow in the first period. That the first network device processes the second IFIT detection packet includes: The first network device sends the second IFIT detection packet to a third network device, where the third network device is a next-hop network device of the first network device. In other words, in this embodiment of this application, the first IFIT detection packet received by the intermediate node device further includes the identifier of the previous-hop network device and the detection result obtained by the previous-hop network device by detecting the first data flow in the first period.

Optionally, the first network device is the egress node device, the first IFIT detection packet further includes a second device identifier and a second data flow detection result, the second device identifier is an identifier of a second network device, the second network device is a previous-hop network device of the first network device, and the second data flow detection result is a detection result obtained by the second network device by detecting the first data flow in the first period; and the first IFIT detection packet further includes a third device identifier and a third data flow detection result, the third device identifier is an identifier of a third network device, the third network device is an ingress node device, and the third data flow detection result is a detection result obtained by the third network device by detecting the first data flow in the first period. In other words, in this embodiment of this application, the first IFIT detection packet received by the egress node device further includes the identifier of the previous-hop network device, the detection result obtained by the previous-hop network device by detecting the first data flow in the first period, the identifier of the ingress node device, and the detection result obtained by the ingress node device by detecting the first data flow in the first period.

Optionally, when the first network device is the egress node device, that the first network device processes the second IFIT detection packet includes: The first network device sends the first data flow detection result, the second data flow detection result, and the third data flow detection result, that is, results obtained by the network devices on a transmission link of the first data flow through detection in a detection mode, to the control device.

Optionally, when the first network device is the egress node device, that the first network device processes the second IFIT detection packet includes: The first network device determines a performance detection result based on the first data flow detection result, the second data flow detection result, and the third data flow detection result, where the performance detection result indicates performance of transmitting the first data flow by the first network device, the second network device, and the third network device. The first network device sends the performance detection result to the control device.

Optionally, when the detection task type is packet loss detection, the performance detection result includes one or more of a total quantity of lost node packets, a node packet loss rate, a total quantity of discarded node bytes, a node byte discarding rate, a total quantity of lost link packets, and a total quantity of discarded link bytes; and the total quantity of lost node packets is a total quantity of data packets discarded by a corresponding node device in the first period, the node packet loss rate is a rate at which the corresponding node device discards the data packets in the first period, the total quantity of discarded node bytes is a total quantity of bytes discarded by the corresponding node device in the first period, the node byte discarding rate is a rate at which the corresponding node device discards the bytes in the first period, the total quantity of lost link packets is a total quantity of data packets discarded on a first transmission link in the first period, the total quantity of discarded link bytes is a total quantity of bytes discarded on the first transmission link in the first period, and the first transmission link is a transmission link of the first data flow.

Optionally, when the detection task type is delay detection, the performance detection result includes an average node delay and/or a link delay; and the average node delay is average duration used by a corresponding node device from receiving a data packet to sending the data packet in the first period, the link delay is a sum of average node delays corresponding to various node devices on a first transmission link in the first period, and the first transmission link is a transmission link of the first data flow.

In conclusion, in this application, the ingress node device and the intermediate node device do not report the detection results, but add the detection results to the first IFIT detection packet hop by hop and then transmit the first IFIT detection packet to the egress node device. After receiving the IFIT detection packet sent by the previous-hop network device, the egress node device may directly report all the detection results to the control device, or the egress node device may process all the detection results to obtain the performance detection result, and then report the performance detection result to the control device.

According to a second aspect, a network performance detection apparatus is provided. The network performance detection apparatus has a function of implementing behavior in the network performance detection method in the first aspect. The network performance detection apparatus includes one or more modules, and the one or more modules are configured to implement the network performance detection method provided in the first aspect.

In other words, this application provides the network performance detection apparatus. The apparatus includes:
a first obtaining module, configured to obtain a first IFIT detection packet, where the first IFIT detection packet includes a first IFIT header, the first IFIT header includes reporting manner indication information, and the reporting manner indication information indicates that a detection result is reported by an egress node device;
a providing module, configured to provide a second IFIT detection packet, where the second IFIT detection packet is a detection packet obtained by adding a first device identifier and a first data flow detection result to the first IFIT detection packet, the first device identifier is an identifier of the first network device, and the first data flow detection result is a detection result obtained by the first network device by detecting a first data flow in a first period; and
a processing module, configured to process the second IFIT detection packet.

Optionally, the apparatus further includes:
a second obtaining module, configured to obtain a first data packet, where the first data packet includes a second IFIT header, the second IFIT header includes a detection task type, and the first data packet is a packet in the first data flow transmitted by the first network device in the first period;
a first determining module, configured to detect the first data packet based on the detection task type, to obtain a first packet detection result; and
a second determining module, configured to determine the first data flow detection result based on the first packet detection result.

Optionally, the first network device is an ingress node device, and the first IFIT detection packet is a detection packet generated by the first network device after the first period ends, or the first IFIT detection packet is a detection packet generated after the first network device receives a retransmission request sent by a control device, where the retransmission request is sent when the control device does not receive the first data flow detection result.

Optionally the processing module includes:
a first sending module, configured to send the second IFIT detection packet to a second network device, where the second network device is a next-hop network device of the first network device.

Optionally, the first network device is an intermediate node device, the first IFIT detection packet further includes a second device identifier and a second data flow detection result, the second device identifier is an identifier of a second network device, the second network device is a previous-hop network device of the first network device, and the second data flow detection result is a detection result obtained by the second network device by detecting the first data flow in the first period.

The processing module includes:
a second sending module, configured to send the second IFIT detection packet to a third network device, where the third network device is a next-hop network device of the first network device.

Optionally, the first network device is the egress node device, the first IFIT detection packet further includes a second device identifier and a second data flow detection result, the second device identifier is an identifier of a second network device, the second network device is a previous-hop network device of the first network device, and the second data flow detection result is a detection result obtained by the second network device by detecting the first data flow in the first period; and
the first IFIT detection packet further includes a third device identifier and a third data flow detection result, the third device identifier is an identifier of a third network device, the third network device is an ingress node device, and the third data flow detection result is a detection result obtained by the third network device by detecting the first data flow in the first period.

Optionally the processing module includes:
a third sending module, configured to send the first data flow detection result, the second data flow detection result, and the third data flow detection result to a control device.

Optionally the processing module includes:
a determining submodule, configured to determine a performance detection result based on the first data flow detection result, the second data flow detection result, and the third data flow detection result, where the performance detection result indicates performance of transmitting the first data flow by the first network device, the second network device, and the third network device; and
a sending submodule, configured to send the performance detection result to a control device.

Optionally, when the detection task type is packet loss detection, the performance detection result includes one or more of a total quantity of lost node packets, a node packet loss rate, a total quantity of discarded node bytes, a node byte discarding rate, a total quantity of lost link packets, and a total quantity of discarded link bytes; and
the total quantity of lost node packets is a total quantity of data packets discarded by a corresponding node device in the first period, the node packet loss rate is a rate at which the corresponding node device discards the data packets in the first period, the total quantity of discarded node bytes is a total quantity of bytes discarded by the corresponding node device in the first period, the node byte discarding rate is a rate at which the corresponding node device discards the bytes in the first period, the total quantity of lost link packets is a total quantity of data packets discarded on a first transmission link in the first period, the total quantity of discarded link bytes is a total quantity of bytes discarded on the first transmission link in the first period, and the first transmission link is a transmission link of the first data flow.

Optionally, when the detection task type is delay detection, the performance detection result includes an average node delay and/or a link delay; and
the average node delay is average duration used by a corresponding node device from receiving a data packet to sending the data packet in the first period, the link delay is a sum of average node delays corresponding to various node devices on a first transmission link in the first period, and the first transmission link is a transmission link of the first data flow.

According to a third aspect, a network device is provided. The network device includes a processor and a memory. The memory is configured to: store a program for performing the network performance detection method provided in the first aspect, and store related data used to implement the network performance detection method provided in the first aspect. The processor is configured to execute the program stored in the memory. An operation apparatus of a storage device may further include a communication bus, and the communication bus is configured to establish a connection between the processor and the memory.

According to a fourth aspect, a computer-readable storage medium is provided. The computer-readable storage medium stores instructions. When the instructions are run on a computer, the computer is enabled to perform the network performance detection method in the first aspect.

According to a fifth aspect, a computer program product including instructions is provided. When the computer program product runs on a computer, the computer is enabled to perform the network performance detection method in the first aspect.

Technical effects achieved in the second aspect, the third aspect, the fourth aspect, and the fifth aspect are similar to those achieved by corresponding technical means in the first aspect. Details are not described again herein.

The technical solutions provided in this application can bring at least the following beneficial effects:

In this application, the first IFIT detection packet includes the first IFIT header, and the first IFIT header includes the reporting manner indication information indicating that the detection result is reported by an egress node device. Therefore, after obtaining the first IFIT detection packet, the first network device can provide and process the second IFIT detection packet. The second IFIT detection packet is a detection packet obtained by adding the first device identifier and the first data flow detection result to the first IFIT detection packet. In other words, the detection result obtained by detecting the first data flow in the first period is reported only by the egress node device, and a node device on the transmission link of the first data flow includes, in a same IFIT detection packet, the detection result obtained by detecting the first data flow in the first period and sends the same IFIT detection packet to the egress node device. In this way, a quantity of reported packets can be reduced, consumed bandwidth is greatly reduced, and an amount of data that needs to be processed by the control device can be reduced, thereby improving a processing capability of the control device.

### BRIEF DESCRIPTION OF DRAWINGS

FIG. 1 is a schematic structural diagram of an IFIT header used in an SR protocol network according to an embodiment of this application;
FIG. 2 is a schematic structural diagram of an IFIT header used in an MPLS protocol network according to an embodiment of this application;
FIG. 3 is a diagram of a system architecture related to a network performance detection method according to an embodiment of this application;
FIG. 4 is a schematic structural diagram of a network device according to an embodiment of this application;
FIG. 5 is a schematic structural diagram of an HTI field included in an IFIT header according to an embodiment of this application;
FIG. 6 is a schematic diagram in which network devices perform an IFIT detection task in a first period according to an embodiment of this application;
FIG. 7 is a flowchart of a network performance detection method according to an embodiment of this application;
FIG. 8 is a schematic diagram of content of a data flow detection result according to an embodiment of this application;
FIG. 9 is a schematic diagram of a performance detection result reported by an egress node device according to an embodiment of this application;
FIG. 10 is a schematic diagram of collecting a detection result of each network device after a first period ends according to an embodiment of this application; and
FIG. 11 is a schematic structural diagram of a network performance detection apparatus according to an embodiment of this application.

### DESCRIPTION OF EMBODIMENTS

To make the objectives, technical solutions, and advantages of this application clearer, the following further describes implementations of this application in detail with reference to the accompanying drawings.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to a similar technical problem.

It should be understood that "at least one" mentioned in this specification means one or more and "a plurality of" means two or more. In descriptions of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, to clearly describe the technical solutions in embodiments of this application, terms such as "first" and "second" are used in embodiments of this application to distinguish between same items or similar items whose functions and purposes are basically the same. A person skilled in the art may understand that the terms such as "first" and "second" do not limit a quantity and an execution sequence, and the terms such as "first" and "second" do not indicate a definite difference.

In an IFIT technology, IFIT information carried in a packet may be used to perform feature marking on a node device through which a data flow in a network passes. Feature marking may also be referred to as coloring. The IFIT information may be used as a whole to form an IFIT header, for example, may be used as an extension header of the multi-protocol label switching (multi-protocol label switching, MPLS) protocol, the segment routing (segment routing, SR) protocol, or the like. Alternatively, the IFIT information may be dispersedly included in, for example, an internet protocol (Internet protocol, IP) header based on field information or the like. Each-hop node device through which the data flow passes reports collected metadata such as a timestamp and a quantity of packets to a control device, so that the control device further calculates a network delay and a packet loss status, recovers a link, and the like based on the reported data.

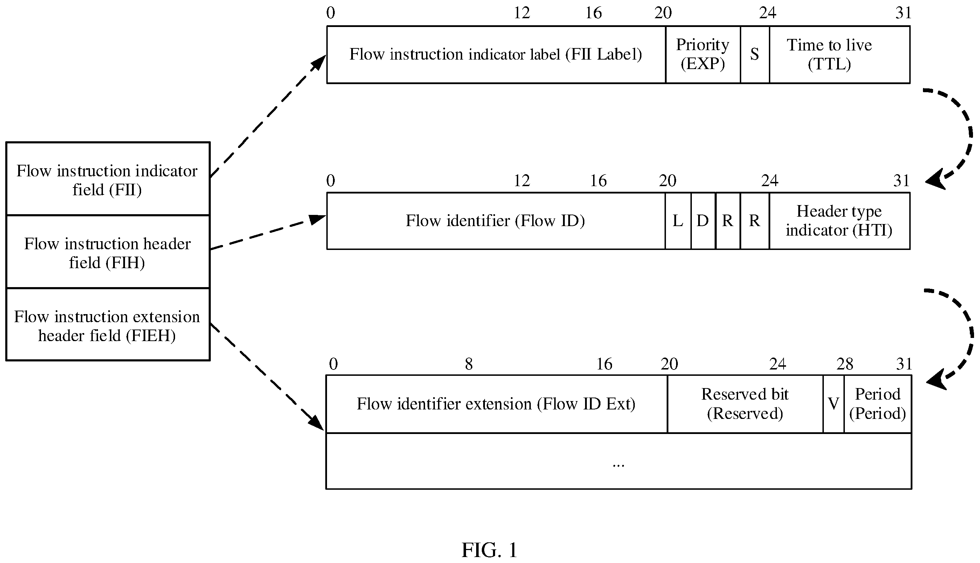

In embodiments of this application, a possible structure of an IFIT header used in an SR protocol network is that shown in FIG. 1. Herein, key fields in the structure of the IFIT header are described.
1. Flow instruction indicator (flow instruction indicator, FII) field: The field is mainly used to identify that data information after the field is IFIT packet information. For example, the following field information may be included.

Flow instruction indicator label (FII Label): A default value may be configured to identify a data flow on which IFIT detection is performed.

An S flag is used to mark whether it is a stack bottom, for example, a value 1 indicates a stack bottom, and a value 0 indicates a non-stack bottom.

Some related information in an outer SR label header, such as a priority EXP and a time to live TTL, may be inherited.

2. Flow instruction header (flow instruction header, FIH) field: The field is mainly used to carry information related to IFIT detection. For example, the following field information may be included.

A flow identifier (flow identity document, Flow ID) is a globally unique identifier allocated to each data flow on which IFIT detection is performed.

An L flag is a packet loss (packet loss) detection coloring flag. For example, "1" indicates that a lost packet is collected, and "0" indicates that a lost packet is not collected.

A D flag is a delay (delay) measurement coloring flag. For example, "1" indicates that a timestamp is collected, and "0" indicates that a timestamp is not collected.

A header type indicator (header type indicator, HTI) marks a detection content range and a range of nodes that need to send an IFIT detection result, for example, different mark values may be used to distinguish whether to perform detection on a link node having an IFIT capability besides nodes at two detection ends; and whether to include a flow instruction extension header (flow instruction extension header, FIEH) field.

An R flag may be used as a reserved flag.

3. Flow instruction extension header FIEH field: The field is used as an extension field and is mainly used to carry other information related to IFIT detection. For example, the following field information may be included.

A flow identifier extension Flow ID Ext is used to extend a flow identifier bit width.

A V flag marks a reverse flow (reverse flow). For example, "0" indicates that a current flow is a forward flow and a receive end may automatically create a reverse flow. "1" indicates that a current flow is a reverse flow and a receive end does not automatically create a reverse flow.

A period (Period) length has different values indicating different period lengths of detection periods, such as 1s, 10s, 30s, 1 min, and 10 min.

An IFIT header is usually carried in a packet to indicate a network device to perform IFIT detection. For example, a packet type may be a data packet, or may be an IFIT detection packet used to transmit a detection result. In an actual application scenario, a plurality of data packets or IFIT detection packets may be sent continuously. For example, the plurality of data packets may constitute one data flow. Alternatively, the plurality of data packets or IFIT detection packets are sent at intervals in a specific period.

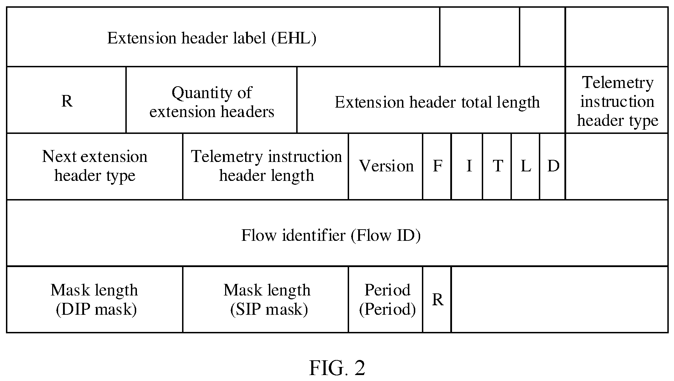

In embodiments of this application, a possible structure of an IFIT header used in an MPLS protocol network is that shown in FIG. 2. Herein, key fields in the structure of the IFIT header are described.
1. An MPLS extension header (extension header, EH) includes the following field information.

An extension header label (EH label, EHL) indicates that the following is the MPLS extension header, a label value 4 indicates a stack bottom label.

An extension header count (EH count) has a value of 1.

An extension header total length (EH total length) is in a unit of 4 bytes, has a value of 3, and has a total of 12 bits.

A telemetry instruction header type (next header), namely, a TIH header type indicates a detection type.

2. Telemetry instruction header (telemetry instruction header, TIH): After the MPLS extension header, an encapsulation format in an end-to-end mode is the same as that in a hop-by-hop mode. The field includes the following field information.

A next extension header type (next header) has a value of 0xFF, indicating that there is no next-layer extension header.

A telemetry instruction header length (length) is in a unit of a long word (4 bits) and has a value of 2.

A version (version) indicates a version number of an IFIT protocol.

An F flag is used to marks whether a fragment is a subsequent fragment. For example, "1" indicates that a fragment is a subsequent fragment and IFIT detection is not performed. This ensures that an IFIT header is added to only the first fragment and IFIT detection is performed on the first fragment after a large data packet is fragmented. "0" indicates that a fragment is not a subsequent fragment.

An I flag is an instruction bit, has 1 bit and a value of 0, and is not used currently.

A T flag is a forwarding bit, has 1 bit and a value of 0, and is not used currently.

An L flag is a packet loss (packet loss) detection coloring flag. For example, "1" indicates that a lost packet is collected, and "0" indicates that a lost packet is not collected.

A D flag is a delay (delay) measurement coloring flag. For example, "1" indicates that a timestamp is collected, and "0" indicates that a timestamp is not collected.

A flow identifier Flow ID is a globally unique identifier allocated to each data flow on which IFIT is performed.

A mask length (DIP mask or SIP mask) indicates use of a reverse flow. For example, a value 0 indicates that the reverse flow is not enabled.

A period (Period) length has different values indicating different period lengths of detection periods, such as 1s, 10s, 30s, 1 min, and 10 min.

An R reverse flow flag is set to, for example, "1" indicating that the reverse flow is enabled.

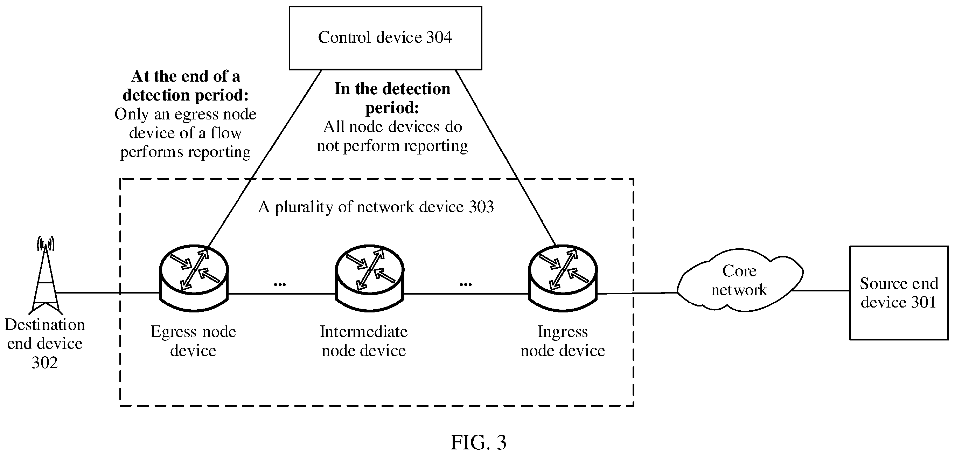

FIG. 3 is a diagram of a system architecture related to a network performance detection method according to an embodiment of this application. The system architecture includes a source end device 301, a destination end device 302, a plurality of network devices 303, and a control device 304. The source end device 301 communicates with the destination end device 302 through a part or all of the plurality of network devices 303. The plurality of network devices 303 include an ingress node device, an intermediate node device, and an egress node device. The ingress node device and the egress node device are communicatively connected to the control device 304.

In this embodiment of this application, there are mainly two phases. A first phase is a data packet transmission phase, and a second phase is an IFIT detection packet transmission phase. Therefore, the following describes functions of devices in the system architecture in two phases.

### 1. Data packet transmission phase

The control device 304 is configured to deliver an IFIT detection task to the ingress node device, and deliver a subscription task to the egress node device. The subscription task is a task of subscribing to an event in which the egress node device reports a detection result.

The source end device 301 is configured to send a data packet that belongs to a first data flow, and the data packet may be transmitted to the ingress node device through a core network.

The ingress node device is configured to receive the IFIT detection task sent by the control device 304. The ingress node device is further configured to: detect a data packet in a first period based on the IFIT detection task delivered by the control device 304, to obtain a packet detection result; set an IFIT header based on the IFIT detection task delivered by the control device 304, where the IFIT header includes a detection task type; and after adding the IFIT header to the data packet, send the data packet to a next-hop network device.

The intermediate node device is configured to: receive the data packet that is sent by the previous-hop network device and to which the IFIT header is added; detect the data packet in the first period based on the detection task type included in the IFIT header in the data packet, to obtain a packet detection result; and send the data packet to which the IFIT header is added to a next-hop network device.

The egress node device is configured to receive the subscription task sent by the control device 304. The egress node device is further configured to: receive the data packet that is sent by the previous-hop network device and to which the IFIT header is added; detect the data packet in the first period based on the detection task type included in the IFIT header in the data packet, to obtain a packet detection result; strip the IFIT header in the data packet; and send the data packet whose IFIT header is stripped to the destination end device 302.

### 2. IFIT detection packet transmission phase

The ingress node device is configured to generate an IFIT detection packet after the first period ends. The IFIT detection packet includes an IFIT header, the IFIT header includes reporting manner indication information, and the reporting manner indication information indicates that a detection result is reported by the egress node device. The ingress node device is further configured to: process the packet detection result in the first period to obtain a data flow detection result, add the data flow detection result to the IFIT detection packet, and transmit the IFIT detection packet to the next-hop network device.

The intermediate node device is configured to: receive the IFIT detection packet sent by the previous-hop network device, process the packet detection result of the intermediate node device in the first period to obtain a data flow detection result, add the data flow detection result to the IFIT detection packet, and send the IFIT detection packet to the next-hop network device.

The egress node device is configured to: receive the IFIT detection packet sent by the previous-hop network device, and report a data flow detection result of each node device to the control device 304 based on the subscription task sent by the control device 304; or process a data flow detection result of each node device to obtain a performance detection result, and report the performance detection result to the control device.

The control device 304 is configured to: receive data reported by the egress node device, and further process the received data.

In this embodiment of this application, the source end device 301 and the destination end device 302 may be any device, for example, base stations or terminals. The network device 303 may be a device such as a router, a switch, or a bridge. The control device 304 may be one server or a server cluster including a plurality of servers, or may be another computer device.

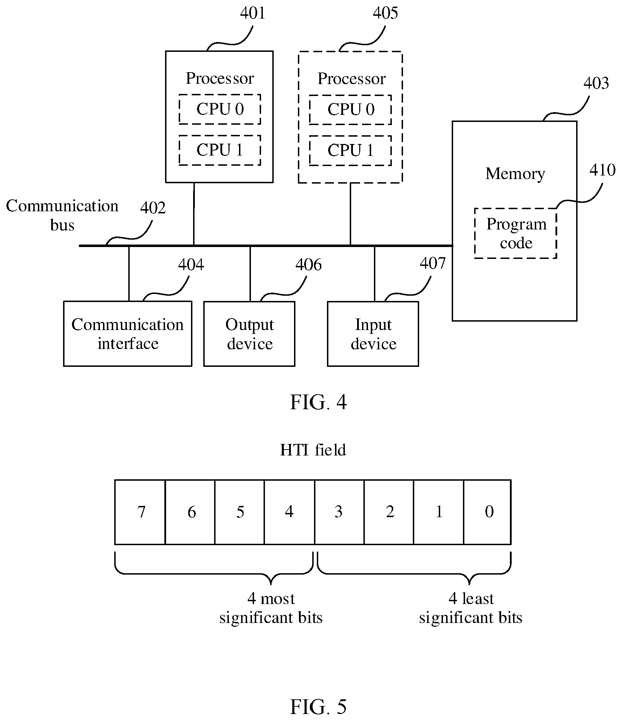

FIG. 4 is a schematic structural diagram of a network device according to an embodiment of this application. The network device may be the network device 303 shown in FIG. 3. The network device may include one or more processors 401, a communication bus 402, a memory 403, and one or more communication interfaces 404.

The processor 401 may be a general-purpose central processing unit (central processing unit, CPU), a network processor (network processor, NP), a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The communication bus 402 is configured to transfer information between the foregoing components. The communication bus 402 may be classified into an address bus, a data bus, a control bus, and the like. For ease of indication, the bus is indicated by using only one bold line in the figure. However, it does not indicate that there is only one bus or only one type of bus.

The memory 403 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible to a computer. However, this is not limited hereto. The memory 403 may exist independently and is connected to the processor 401 by using the communications bus 402. Alternatively, the memory 403 may be integrated with the processor 401.

The communication interface 404 is configured to communicate with another device or a communication network by using any transceiver-type apparatus. The communication interface 404 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In some embodiments, the network device may include a plurality of processors, for example, the processor 401 and a processor 405 shown in FIG. 4. Each of the processors may be a single-core processor, or may be a multi-core processor. The processor herein may be one or more devices, circuits, and/or processing cores configured to process data (for example, computer program instructions).

During specific implementation, in an embodiment, the network device may further include an output device 406 and an input device 407. The output device 406 communicates with the processor 401, and may display information in a plurality of manners. For example, the output device 406 may be a liquid crystal display (liquid crystal display, LCD), a light emitting diode (light emitting diode, LED) display device, a cathode ray tube (cathode ray tube, CRT) display device, or a projector (projector). The input device 407 communicates with the processor 401, and may receive an input from a user in a plurality of manners. For example, the input device 407 may be a mouse, a keyboard, a touchscreen device, a sensing device, or the like.

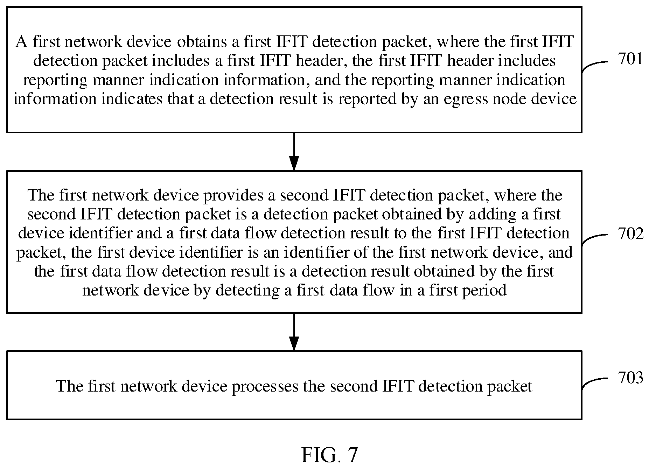

In some embodiments, the memory 403 is configured to store program code 410 for executing the solutions in this application, and the processor 401 may execute the program code 410 stored in the memory 403. The program code may include one or more software modules. The network device may implement, by using the processor 401 and the program code 410 in the memory 403, a network performance detection method provided in the following embodiment in FIG. 7.

The following describes in detail the network performance detection method provided in embodiments of this application. Based on the foregoing descriptions, there are mainly two phases in embodiments of this application. Therefore, for ease of understanding, a data packet transmission process is first described.

A first network device obtains a first data packet, where the first data packet includes a second IFIT header, the second IFIT header includes a detection task type, and the first data packet is a packet in a first data flow transmitted by the first network device in a first period. The first network device detects the first data packet based on the detection task type, to obtain a first packet detection result. The first network device stores the first packet detection result, and processes the first data packet.

In embodiments of this application, the first network device may be an ingress node device, an intermediate node device, or an egress node device. Therefore, the following separately describes processes in which the ingress node device, the intermediate node device, and the egress node device transmit a data packet.

### 1. The first network device is the ingress node device

When the first network device is the ingress node device, the first network device may perform timing on a period length of the first period. In a timing process, before the first network device obtains the first data packet, the first network device may receive a second data packet that belongs to the first data flow and that is sent by a source end device. The first network device provides the first data packet. To be specific, the first network device sets the second IFIT header based on a stored IFIT detection task, and adds the second IFIT header to the second data packet, to obtain the first data packet. Then, the first network device may detect the first data packet based on the detection task type in the second IFIT header, to obtain the first packet detection result. Then, the first network device may store the first packet detection result, and send the first data packet to a next-hop network device of the first network device.

In some embodiments, the IFIT detection task stored in the first network device may be delivered by a control device. In other words, before IFIT detection is performed, the control device may deliver the IFIT detection task to the first network device. Optionally, after receiving the IFIT detection task delivered by the control device, the first network device may feed back response information for acknowledging reception of the IFIT detection task to the control device, so that the control device learns that the IFIT detection task is successfully delivered, thereby facilitating management of operation and maintenance personnel.

The IFIT detection task may include one or more of the following information: reporting manner indication information, detection mode indication information, a period length of a detection period, a key attribute of an IFIT detection flow, an identifier of the ingress node device, an identifier of an egress node device, the detection task type, and the like.

The reporting manner indication information indicates that a detection result is reported by the egress node device. The detection mode indication information indicates that a detection mode is an end-to-end detection mode or a hop-by-hop detection mode. The key attribute of the IFIT detection flow indicates a key attribute of a data flow on which IFIT detection is performed, and the key attribute may include a source address, a destination address, a source port, a destination port, a COS value, and the like. The detection task type may include packet loss detection, delay detection, traffic detection, and the like.

It should be noted that, if an option of the packet loss detection, the delay detection, or the traffic detection is default, that is, is not set, it may be considered by default that corresponding detection needs to be performed. For example, if the packet loss detection is default, it may be considered by default that the packet loss detection needs to be performed. For another example, if the delay detection is default, it may be considered by default that the delay detection needs to be performed. Similarly, by default, other information in the IFT detection task may be detected in a default manner. In addition, the control device may deliver the IFIT detection task to the first network device based on interfaces such as a NetConf Yang, a gNMI, and a CLI.

A structure of the second IFIT header may be that shown in FIG. 1. As shown in FIG. 5, a length of an HTI field included in the second IFIT header is eight bits. Four least significant bits of the HTI field are not limited in embodiments of this application, and four most significant bits of the HTI field are defined as follows:
Bit-7: indicates a detection result reporting manner, where a value "0" indicates hop-by-hop reporting (postcard mode), and a value "1" indicates egress node reporting.
Bit-6: indicates a packet processing mode, where a value "0" indicates a detection result reporting mode, and a value "1" indicates a detection result statistics mode.
Bit-5: indicates a detection mode, where a value "0" indicates an end-to-end detection mode, and a value "1" indicates a hop-by-hop detection mode.
Bit-4: indicates a detection result cache period, where a value "0" indicates that a detection result of only one period is cached, and a value "1" indicates that detection results of N periods are cached based on a global configuration. N is an integer greater than 1, and may be 3, 4, 5, or the like.

It should be noted that, because different values of each of the four most significant bits of the HTI field indicate different meanings, the foregoing is merely an example, and values of bits and meanings indicated by the values may alternatively be combined in another manner. In addition, the four most significant bits of the HTI field indicate the foregoing four types of information. The foregoing is merely an example, and specific bits indicating specific types of information may be alternatively combined in another manner. The manner in the foregoing example is used as an example. A value of the bit-7 of the HTI field in the second IFIT header is "1". A value of the bit-6 is "1". A value of the bit-5 may be "0" or "1", depending on whether end-to-end detection or hop-by-hop detection is currently performed. A value of the bit-4 may be "0" or "1", depending on whether a detection result of one period is currently cached or detection results of N periods are currently cached.

It should be noted that in embodiments of this application, the foregoing information may be indicated by using the four most significant bits of the HTI field, or in another manner. This is not limited in embodiments of this application. In addition, FIG. 1 shows only an SR-type IFIT header. In embodiments of this application, another type of IFIT header may alternatively be used, for example, an MPLS-type IFIT header.

It can be learned from the foregoing descriptions that the detection task type may include the packet loss detection, the delay detection, the traffic detection, and the like, and the detection task type may be determined by using a related flag in the second IFIT header. In an example, when the detection task type is the packet loss detection, the first network device may collect statistics about whether the first data packet is sent through an egress interface of the first network device. If the first data packet is sent, it may be determined that the first data packet is not discarded, that is, a quantity of data packets discarded inside the first network device is 0. Similarly, a quantity of bytes discarded inside the first network device is 0. When the detection task type is the delay detection, the first network device may determine whether the first data packet is a delay-colored packet. If the first data packet is the delay-colored packet, the first network device may collect statistics about a moment at which the first network device receives the second data packet and a moment at which the first network device sends the first data packet, and determine duration between the two moments as duration used by the first network device to send the first data packet. When the detection task type is the traffic detection, the first network device may detect a total quantity of bytes of the first data packet. That is, the foregoing detected data may be stored as the first packet detection result.

The delay-colored packet may mean that a delay measurement coloring flag in the second IFIT header is "1". It should be noted that, in embodiments of this application, delay detection may not be performed on all data packets in the first period, but a data packet is randomly selected, and the data packet is set to a delay-colored packet, so that delay detection is performed only on the delay-colored packet. Certainly, in some other embodiments, delay detection may be performed on a plurality of or all data packets in the first period. This is not limited in embodiments of this application.

Because the bit-4 of the HTI field in the second IFIT may indicate that the detection result of the period is cached or the detection results of the N periods are cached, if the detection result of the period is cached, the first network device may rewrite a detection result of a previous period with the first packet detection result. If the detection results of the N periods are cached, the first network device may determine a quantity of periods of the currently stored detection results. If the quantity of periods does not reach N, the first packet detection result may be directly stored. If the quantity of periods reaches N, the first packet detection result may be used to rewrite a detection result of an earliest period.

In some embodiments, the first network device may store the first packet detection result based on a period identifier of the first period and a flow identifier of the first data flow. That is, a mapping relationship among the period identifier of the first period, the flow identifier of the first data flow, and the first packet detection result is stored. The flow identifier of the first data flow may be 5-tuple information of a data packet included in the first data flow, or certainly, may be a flow identifier allocated to the first data flow when the first network device receives, for the first time, the data packet included in the first data flow. The period identifier of the first period and the flow identifier of the first data flow may be determined from the second IFIT header.

In some embodiments, to ensure accuracy of a detection result, the first network device may perform data normalization based on the period length of the detection period, that is, set a start time point of an IFIT detection task based on the period length of the detection period, further set a timer to record the period length of the detection period, set a period number of the first detection period, and the like. The period number may be used as a period identifier. For example, assuming that the period length of the detection period is 10 seconds, the first network device may perform data normalization based on the 10 seconds, that is, set, as the start time point of the IFIT detection task, an absolute time point that is an integer multiple of the first 10 seconds after receiving the IFIT detection task. Assuming that a time point at which the IFIT detection task is received is 14:23:02, the first network device may set 14:23:10 as the start time point, and set the timer to update a period number every 10 seconds. The period number of the first detection period is 1, and the period number is increased by 1 every 10 seconds.

Optionally, the first network device may not perform the IFIT detection task in the first detection period after receiving the IFIT detection task, and the first detection period is used to synchronize detection periods of various network devices. To be specific, after receiving the first data packet that belongs to the first data flow, the ingress node device may set the second IFIT header in the first detection period, add the second IFIT header to the first data packet, and sequentially transmit, to the egress node device through each intermediate node device, the data packet carrying the second IFIT header. The second IFIT header may include the period length of the detection period, the detection task type, the reporting manner indication information, the period number, and the like. In the first detection period, the period number may be equal to 1. Various network devices may determine, based on the period number, that the detection period is the first detection period, and perform data normalization based only on the period length of the detection period, to synchronize the periods of the network devices. In a detection period other than the first detection period, the first network device needs to perform the IFIT detection task.

It should be noted that, in embodiments of this application, the second IFIT header may carry the period number. In this way, another network device may determine, by using the period number, data packets that belong to a same period.

### 2. The first network device is the intermediate node device

When the first network device is the intermediate node device, the first data packet obtained by the first network device is a data packet sent by a previous-hop network device of the first network device. In other words, the first network device may receive the first data packet sent by the previous-hop network device of the first network device. The first network device may determine the detection task type from the second IFIT header included in the first data packet, and therefore detect the first data packet based on the detection task type, to obtain the first packet detection result. The first network device stores the first packet detection result, and sends the first data packet to a next-hop network device of the first network device.

Optionally, based on the foregoing descriptions of 1, a structure of the second IFIT header is that shown in FIG. 1, and definitions of four most significant bits of an HTI field in the second IFIT header are the same as those in the foregoing example. After receiving the first data packet, the first network device may determine that a value of a bit-6 is "1". If a value of a bit-5 is "0", the first network device may directly transmit the first data packet to the next-hop network device, that is, only the ingress node device and the egress node device perform an IFIT detection task. If a value of a bit-5 is "1", each network device needs to perform an IFIT detection task. In this case, the first network device may determine the detection task type from the second IFIT header included in the first data packet, and therefore detect the first data packet based on the detection task type.

A manner in which the first network device serving as the intermediate node device stores the first packet detection result is similar to the foregoing manner in which the first packet detection result is stored in 1, and details are not described in embodiments of this application again. In addition, for a manner in which the first network device detects the first data packet based on the detection task type, refer to the descriptions of 1.

### 3. The first network device is the egress node device

When the first network device is the egress node device, the first data packet obtained by the first network device is a data packet sent by a previous-hop network device of the first network device. In other words, the first network device may receive the first data packet sent by the previous-hop network device of the first network device. The first network device may determine the detection task type from the second IFIT header included in the first data packet, and therefore detect the first data packet based on the detection task type, to obtain the first packet detection result. The first network device stores the first packet detection result, parses out the second IFIT header from the first data packet to obtain a second data packet, and sends the second data packet to a destination end device. In other words, the second IFIT header in the first data packet is stripped to obtain the second data packet, and the second data packet is sent to the destination end device.

Optionally, based on the foregoing descriptions of 1, a structure of the second IFIT header is that shown in FIG. 1, and definitions of four most significant bits of an HTI field in the second IFIT header are the same as those in the foregoing example. After receiving the first data packet, the first network device may determine that a value of a bit-6 is "1". Regardless of whether a value of a bit-5 is "0" or "1", because the first network device is the egress node device, the first network device may determine the detection task type from the second IFIT header included in the first data packet, and therefore detect the first data packet based on the detection task type.

A manner in which the first network device serving as the egress node device stores the first packet detection result is similar to the foregoing manner in which the first packet detection result is stored in 1, and details are not described in embodiments of this application again. In addition, for a manner in which the first network device detects the first data packet based on the detection task type, refer to the descriptions of 1.

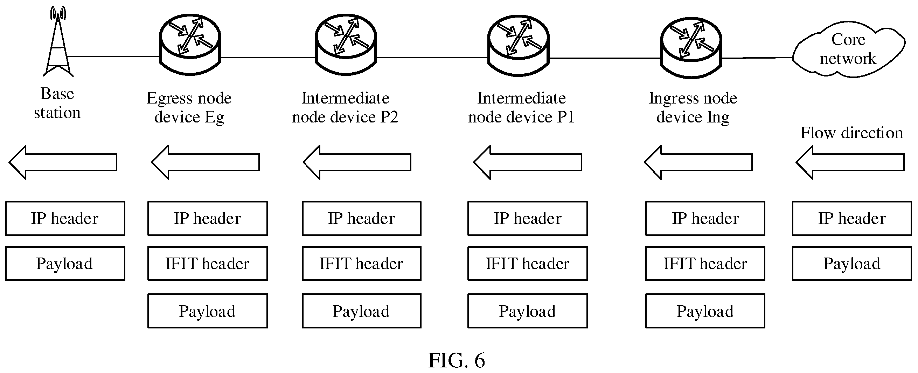

FIG. 6 is a schematic diagram in which network devices perform an IFIT detection task in a first period according to an embodiment of this application. Refer to FIG. 6. An ingress node device (which may be referred to as an ingress device, Ing for short) receives a second data packet (including an IP header and a payload) that belongs to a first data flow and that is sent from a core network, generates a second IFIT header based on an IFIT detection task, adds the second IFIT header between the IP header and the payload, modifies a check code, a data length, and the like in the IP header to obtain a first data packet, and transmits, to an intermediate node device P1, the first data packet carrying the second IFIT header. After receiving the first data packet, the intermediate node device P1 parses the second IFIT header to learn that the data packet needs to be currently detected, performs the detection task, and continues to transmit the first data packet to a next-hop network device, that is, an intermediate node device P2. The intermediate node device P2 performs a same operation as the intermediate node device P1, until the first data packet is transmitted to an egress node device (which may be referred to as an egress device, Eg for short). The egress node device parses the second IFIT header to learn that the data packet also needs to be currently detected. After detecting the data packet, the egress node device may remove the second IFIT header, and then transmit the second data packet carrying only the IP header and the payload, for example, transmit the second data packet to a base station.

After the data packet is transmitted according to the foregoing method and IFIT detection is performed in a process of transmitting the data packet, the first network device may transmit a detection result according to the following method after the first period ends. FIG. 7 is a flowchart of a network performance detection method and also a flowchart of a detection result transmission method according to an embodiment of this application. Refer to FIG. 7. The method includes the following steps.

Step 701: A first network device obtains a first IFIT detection packet, where the first IFIT detection packet includes a first IFIT header, the first IFIT header includes reporting manner indication information, and the reporting manner indication information indicates that a detection result is reported by an egress node device.

Based on the foregoing descriptions, the first network device may be an ingress node device, an intermediate node device, or the egress node device.

When the first network device is the ingress node device, the first IFIT detection packet is a detection packet generated by the first network device after a first period ends, or the first IFIT detection packet is a detection packet generated after the first network device receives a retransmission request sent by a control device, where the retransmission request is sent when the control device does not receive a first data flow detection result. In other words, the ingress node device may generate the first IFIT detection packet after the first period ends, or may generate the first IFIT detection packet after receiving the retransmission request sent by the control device.

It should be noted that, in the solution provided in this embodiment of this application, the egress node device reports the first data flow detection result in the first period to the control device. If determining that the first data flow detection result in the first period is not received, the control device may send the retransmission request to the ingress node device. After receiving the retransmission request, the ingress node device may respond to the retransmission request, query a locally stored detection result, and regenerate the first IFIT detection packet. The retransmission request may include an identifier of the ingress node device, a flow identifier of a first data flow, and a period identifier of the first period.

When the first network device is the intermediate node device, the first IFIT detection packet further includes a second device identifier and a second data flow detection result, the second device identifier is an identifier of a second network device, the second network device is a previous-hop network device of the first network device, and the second data flow detection result is a detection result obtained by the second network device by detecting the first data flow in the first period. In other words, in this embodiment of this application, the first IFIT detection packet received by the intermediate node device further includes the identifier of the previous-hop network device and the detection result obtained by the previous-hop network device by detecting the first data flow in the first period.

When the first network device is the egress node device, the first IFIT detection packet further includes a second device identifier and a second data flow detection result, the second device identifier is an identifier of a second network device, the second network device is a previous-hop network device of the first network device, and the second data flow detection result is a detection result obtained by the second network device by detecting the first data flow in the first period. In addition, the first IFIT detection packet further includes a third device identifier and a third data flow detection result, the third device identifier is an identifier of a third network device, the third network device is an ingress node device, and the third data flow detection result is a detection result obtained by the third network device by detecting the first data flow in the first period. In other words, in this embodiment of this application, the first IFIT detection packet received by the egress node device further includes the identifier of the previous-hop network device, the detection result obtained by the previous-hop network device by detecting the first data flow in the first period, the identifier of the ingress node device, and the detection result obtained by the ingress node device by detecting the first data flow in the first period.

It should be noted that the detection mode may be an end-to-end detection mode or a hop-by-hop detection mode. When the detection mode is the hop-by-hop detection mode, for the intermediate node device and the egress node device, the first IFIT detection packet may carry an identifier of each-hop network device before the first network device and a detection result obtained by each-hop network device by detecting the first data flow in the first period. However, when the detection mode is the end-to-end detection mode, for the intermediate node device and the egress node device, the first IFIT detection packet may carry the identifier of the ingress node device and the detection result obtained by the ingress node device by detecting the first data flow in the first period, but does not include an identifier of the intermediate node device and a detection result obtained by the intermediate node device by detecting the first data flow in the first period.

In addition, a manner of determining the second data flow detection result and the third data flow detection result is similar to a manner of determining the first data flow detection result. Therefore, the manner of determining the second data flow detection result and the third data flow detection result is not described in detail in this embodiment of this application. For details, refer to the following manner of determining the first data flow detection result.

In addition, a structure of the first IFIT header may be the same as a structure of a second IFIT header, that is, the structure of the first IFIT header may be that shown in FIG. 1. In this case, a value of a bit-6 of an HTI field in the first IFIT header is "0", and values of other bits may be the same as values in the second IFIT header.

Step 702: The first network device provides a second IFIT detection packet, where the second IFIT detection packet is a detection packet obtained by adding a first device identifier and the first data flow detection result to the first IFIT detection packet, the first device identifier is an identifier of the first network device, and the first data flow detection result is a detection result obtained by the first network device by detecting the first data flow in the first period.

In some embodiments, after the first network device obtains the first IFIT detection packet, the first network device may add the first device identifier and the first data flow detection result to the first IFIT detection packet, to obtain the second IFIT detection packet. In this way, the first data flow detection result needs to be determined before the first data flow detection result is added to the first IFIT detection packet.

Optionally, the structure of the first IFIT header is the structure shown in FIG. 1, and definitions of four most significant bits of an HTI field in the second IFIT header are the same as those in the foregoing example. After the first network device receives the first IFIT detection packet, the first network device may parse the second IFIT header to determine whether a value of a bit-6 of the HTI field is "0". If the value is "0", it may be determined that the first device identifier and the first data flow detection result currently need to be added to the first IFIT detection packet. That is, the bit-6 of the HTI field in the second IFIT header indicates whether a current phase is a detection result reporting phase.

It should be noted that using the bit-6 of the HTI field in the second IFIT header to indicate whether the current phase is the detection result reporting phase is merely an example, and another manner may be alternatively used for indication. This is not limited in this embodiment of this application.

An implementation in which the first network device determines the first data flow detection result may be as follows: The first network device obtains, from a stored mapping relationship based on the flow identifier of the first data flow and the period identifier of the first period, a packet detection result obtained by the first network device by detecting each data packet in the first period, where the packet detection result includes the foregoing first packet detection result. Then, the first network device may process each obtained packet detection result to obtain the first data flow detection result.

In an example, when the detection task type is packet loss detection, the first network device may collect statistics about a sum of quantities of data packets discarded in packet detection results, to obtain a total quantity of data packets discarded inside the first network device. The first network device may further collect statistics about a sum of quantities of bytes discarded in the packet detection results, to obtain a total quantity of bytes discarded inside the first network device.

In another example, when the detection task type is delay detection, the first network device may collect statistics about duration obtained through statistics collection based on a delay-colored packet in each packet detection result, and determine an average value of the duration as average duration used by the first network device from receiving a data packet to sending a data packet in the first period.

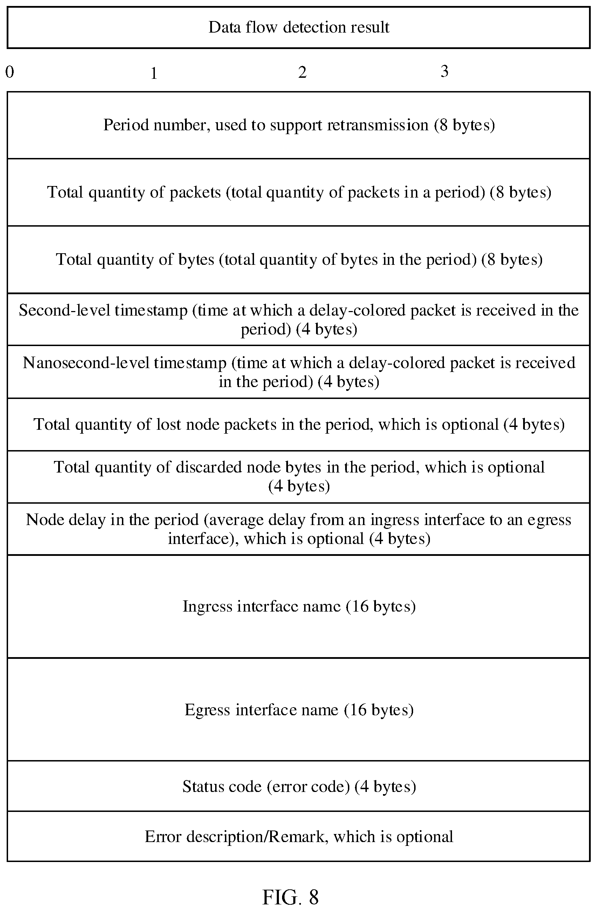

In some embodiments, the first data flow detection result may include content in FIG. 8. A period number may be used as a period identifier. A total quantity of packets is a total quantity of data packets that belong to the first data flow and that pass through the first network device in the first period. A total quantity of bytes is a total quantity of bytes that belong to the first data flow and that pass through the first network device in the first period. A second-level timestamp and a nanosecond-level timestamp are respectively time with precision of seconds and time with precision of nanoseconds at which a delay-colored packet that belongs to the first data flow is received in the first period. A total quantity of lost node packets in a period is a total quantity of data packets that belong to the first data flow and that are discarded in the first period. A total quantity of discarded node bytes in the period is a total quantity of bytes that belong to the first data flow and that are discarded in the first period. A status code is used to describe a trust status of the first data flow detection result. If a value of the status code is 0, it indicates that the first data flow detection result is trustworthy. If a value of the status code is 1, it indicates that the first data flow detection result is a detection result of the first detection period and is not trustworthy. If a value of the status code is 2, it indicates that detection data of a corresponding period does not exist when retransmission is requested.

It should be noted that, it can be learned from the foregoing descriptions that the control device may be globally configured to cache the detection results of the N periods, or cache the detection result of the only one period. If the detection result of the only one period is cached, a time interval from a time point at which the ingress node device completes detection of a data packet of one period to a time point at which the ingress node device receives the retransmission request sent by the control device may exceed one period length. In this case, the value of the status code included in the first data flow detection result is 2. In other words, the control device globally configures to cache the detection results of the N periods, so that it can be ensured that a detection result of each period can be finally reported to the control device.

When the first period ends, a first data packet received by the ingress node device may still be in a queue and has not been sent in a timely manner. Therefore, the data packet still belongs to the first period. In this case, if the ingress node device immediately generates the first IFIT detection packet, adds the first device identifier and the first data flow detection result to the first IFIT detection packet to obtain the second IFIT detection packet, and starts to transmit the second IFIT detection packet, the second IFIT detection packet may reach a network device after the ingress node device earlier than a data packet, in the queue, that belongs to the first period. The network device after the ingress node device first determines a data flow detection result based on a stored packet detection result, and ignores a packet detection result of the data packet. In other words, in this case, the data flow detection result determined by the network device after the ingress node device cannot entirely include detection results of all data packets in the first period, that is, there is a risk of miss detection. Based on this, the ingress node device may generate the first IFIT detection packet after specified duration when the first period ends, to ensure that each network device can entirely detect the data packets transmitted in the first period.

For example, the specified duration may be 1/3 of the period length or 3/10 of the period length. For example, the period length is 10 seconds, and the specified duration may be 3 seconds, that is, the first IFIT detection packet is generated at an interval of 3 seconds after the first period ends.

Step 703: The first network device processes the second IFIT detection packet.

In this embodiment of this application, the first network device may be the ingress node device, the intermediate node device, or the egress node device. Based on this, after providing the second IFIT detection packet, different node devices process the second IFIT detection packet in different manners. The following describes this.

When the first network device is the ingress node device, the first network device may send the second IFIT detection packet to the second network device, and the second network device is a next-hop network device of the first network device.

When the first network device is the intermediate node device, the first network device may send the second IFIT detection packet to the third network device, and the third network device is a next-hop network device of the first network device.

When the first network device is the egress node device, the first network device may send the first data flow detection result, the second data flow detection result, and the third data flow detection result, that is, results obtained by the network devices on a transmission link of the first data flow through detection in a detection mode, to the control device. Alternatively, the first network device may determine a performance detection result based on the first data flow detection result, the second data flow detection result, and the third data flow detection result, and send the performance detection result to the control device. The performance detection result indicates performance of transmitting the first data flow by the first network device, the second network device, and the third network device.

Optionally, in this embodiment of this application, when the first network device is the egress node device, after receiving the first IFIT detection packet, the first network device may parse the first IFIT header to obtain the second data flow detection result and the third data flow detection result, and then process the first data flow detection result, the second data flow detection result, and the third data flow detection result to obtain the performance detection result. Alternatively, the first network device may add the identifier of the first network device and the first data flow detection result to the first IFIT detection packet according to the foregoing method, to obtain the second IFIT detection packet, then parse the second IFIT detection packet to obtain all detection results, and perform processing to obtain the performance detection result.

In conclusion, in this embodiment of this application, the ingress node device and the intermediate node device do not report the detection results, but add the detection results to the first IFIT detection packet hop by hop and then transmit the first IFIT detection packet to the egress node device. After receiving the IFIT detection packet sent by the previous-hop network device, the egress node device may directly report all the detection results to the control device, or the egress node device may process all the detection results to obtain the performance detection result, and then report the performance detection result to the control device.

It can be learned from the foregoing descriptions that the detection task type may be the packet loss detection, the delay detection, or the like. When the detection task type is the packet loss detection, the performance detection result may include one or more of a total quantity of lost node packets, a node packet loss rate, a total quantity of discarded node bytes, a node byte discarding rate, a total quantity of lost link packets, and a total quantity of discarded link bytes. When the detection task type is the delay detection, the performance detection result includes an average node delay and/or a link delay.

The total quantity of lost node packets is a total quantity of data packets discarded by a corresponding node device in the first period, the node packet loss rate is a rate at which the corresponding node device discards the data packets in the first period, the total quantity of discarded node bytes is a total quantity of bytes discarded by the corresponding node device in the first period, the node byte discarding rate is a rate at which the corresponding node device discards the bytes in the first period, the total quantity of lost link packets is a total quantity of data packets discarded on a first transmission link in the first period, the total quantity of discarded link bytes is a total quantity of bytes discarded on the first transmission link in the first period, and the first transmission link is a transmission link of the first data flow. The average node delay is average duration used by a corresponding node device from receiving a data packet to sending the data packet in the first period, and the link delay is a sum of average node delays corresponding to various node devices on the first transmission link in the first period.

In addition, the detection task type may further be traffic detection, jitter detection, link recovery, or the like. In other words, the egress node device may further obtain traffic (a total quantity, a total discarding quantity, and the like), a jitter, a link, and the like of the first data flow transmitted in the first period.

It should be noted that, in this embodiment of this application, the egress node device may encapsulate the detection results into a user datagram protocol (user datagram protocol, UDP) packet for reporting, or may encapsulate the detection results into another protocol packet for reporting. This is not limited in this embodiment of this application. The egress node device processes the detection results to obtain the performance detection result, and then encapsulates and reports the performance detection result to the control device, so that a calculation amount of the control device can be reduced, and a data flow processing capability can be improved. In addition, in this embodiment of this application, only the egress node device performs operations such as IFIT encoding, telemetry header encapsulation, and table lookup and sending on the detection results, so that processing operations of other node devices can be reduced. When there are large-scale flows in an entire network, there is a small limitation on this embodiment of this application by a specification of an IFIT protocol supported by board hardware of a node device and an entire system.

Optionally, to ensure that a detection result is not lost as much as possible, a higher priority may be set for an IFIT detection packet to which a detection result is added hop by hop. In this way, a priority may be identified by using a quality of service (quality of service, QoS) mechanism, to ensure that the packet is not discarded during QoS scheduling.

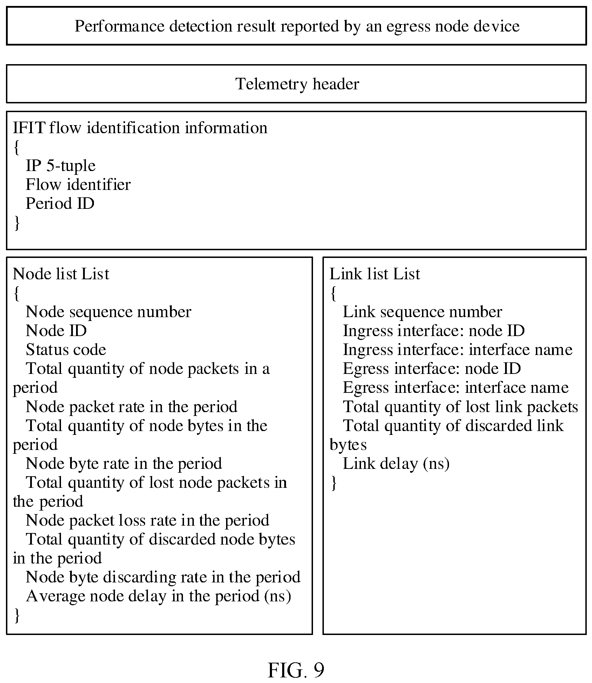

FIG. 9 is a schematic diagram of a performance detection result reported by an egress node device according to an embodiment of this application. Refer to FIG. 9. The performance detection result may include a telemetry header, IFIT flow identification information, a node performance detection result, and a link performance detection result. The telemetry header indicates that a type of a reported data packet is an IFIT detection result. The IFIT flow identification information may include an IP 5-tuple of a first data flow, a flow identifier of the first data flow, and a period number of a first period. The node performance detection result may include a detection result of each node device, including a node sequence number, a node ID, a status code, a total quantity of node packets, a node packet rate, a total quantity of node bytes, a node byte rate, a total quantity of lost node packets, a node packet loss rate, a total quantity of discarded node bytes, a node byte discarding rate, and an average node delay. The link performance detection result may include a detection result of each link, including a link sequence number, an identifier of a node of an ingress interface, an ingress interface name, an identifier of a node of an egress interface, an egress interface name, a total quantity of lost link packets, a total quantity of discarded link bytes, and a link delay. It should be noted that the included telemetry header is merely used as an example. In another embodiment, there may alternatively be another type of encapsulation header, which is related to a used telemetry protocol.

Detection results of various node devices may be sequentially arranged in a node sequence. The node packet rate is a rate at which a corresponding node device transmits data packets, and may be determined by dividing a total quantity of data packets transmitted by the corresponding node device in the first period by a period length of the first period, that is, determined by dividing the total quantity of node packets by the period length of the first period. The node byte rate is a rate at which a corresponding node device transmits bytes, and may be determined by dividing a total quantity of bytes transmitted by the corresponding node device in the first period by the period length of the first period, that is, determined by dividing the total quantity of node bytes by the period length of the first period. The node packet loss rate is a rate at which a corresponding node device discards data packets, and may be determined by dividing a total quantity of data packets discarded by the corresponding node device in the first period by the period length of the first period, that is, determined by dividing the total quantity of lost node packets by the period length of the first period. The node byte discarding rate is a rate at which the corresponding node device discards bytes, and may be determined by dividing a total quantity of bytes discarded by the corresponding node device in the first period by the period length of the first period, that is, determined by dividing the total quantity of discarded node bytes by the period length of the first period. The average node delay is an average value of delays from receiving delay-colored packets through an ingress interface transmitted by a corresponding node device in the first period to sending the delay-colored packets through an egress interface.

The link sequence number is a sequence number allocated to a corresponding link after the egress node device recovers the link based on a node identifier carried in a detection result. The identifier of the node of the ingress interface is an identifier of an ingress node device of the link. The ingress interface name is an interface through which the ingress node device of the link receives a data packet that belongs to the first data flow. The identifier of the node of the egress interface is an identifier of an egress node device of the link. The egress interface name is an interface through which the egress node device of the link sends a data packet that belongs to the first data flow. The total quantity of lost link packets is a total quantity of data packets discarded inside each node device on the link plus a total quantity of data packets discarded between node devices. The total quantity of discarded link bytes is a total quantity of bytes discarded inside each node device on the link plus a total quantity of bytes discarded between node devices. The link delay is an average value of delay lengths inside each node device and between node devices on the link.

It should be noted that the link herein may be an entire link from the ingress node device communicating with a source end device to the egress node device communicating with a destination end device, or may be a part of the entire link.

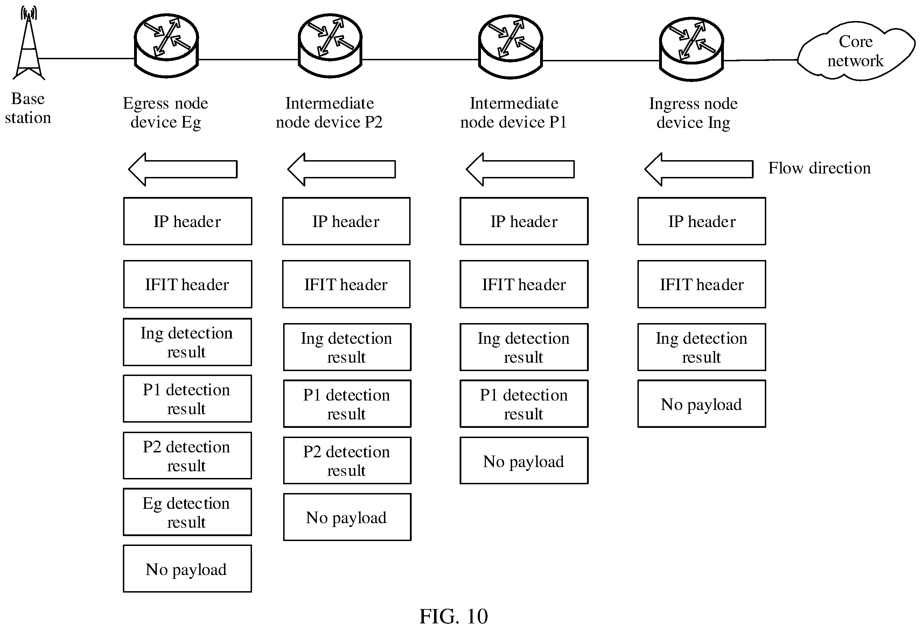

FIG. 10 is a schematic diagram of collecting a detection result of each network device after a first period ends according to an embodiment of this application. Refer to FIG. 10. An ingress node device may construct a first IFIT header at a specified interval after a first period ends, add the first IFIT header behind an IP header of a first data flow to obtain an IFIT detection packet, and add a data flow detection result of the ingress node device (an Ing detection result) behind the first IFIT header to obtain an IFIT detection packet. The packet does not carry a payload, that is, the payload is empty. Then, the IFIT detection packet that carries the Ing detection result is sent to an intermediate node device P1. After receiving the IFIT detection packet, the intermediate node device P1 parses a second IFIT header to learn that a detection result needs to be currently reported, adds a data flow detection result of the intermediate node device P1 (a P1 detection result) behind the Ing detection result, and continues to send, to a next-hop network device, that is, to an intermediate node device P2, the IFIT detection packet that carries the Ing detection result and the P1 detection result. The intermediate node device P2 performs an operation similar to that of the intermediate node device P1 until the data flow detection result of the ingress node device and a data flow detection result of each intermediate device are sent to an egress node device. The egress node device parses the second IFIT header, learns that a detection result needs to be currently reported, may add a data flow detection result of the egress node device (an Eg detection result) behind the P2 detection result to obtain an IFIT detection packet, and then parses the IFIT detection packet to obtain the Ing detection result, the P1 detection result, the P2 detection result, and the Eg detection result. The egress node device processes these detection results to obtain a performance detection result, and reports the performance detection result to a control device.

After receiving a reported packet that carries the performance detection result or carries the plurality of data flow detection results, the control device may determine the performance detection result of the first period, compare the performance detection result with a stored detection result of a previous period, generate a change log, and analyze a link of each period to obtain a link topology and the like.

In this embodiment of this application, each network device adds a detection result to the IFIT detection packet hop by hop, and the egress node device performs processing and reporting. In addition, a payload of the IFIT detection packet is empty. Therefore, a proportion of valid payload carried in the IFIT detection packet is very high, this greatly reduces bandwidth consumed by a detection task. In addition, in this embodiment of this application, a structure of an original IFIT header may remain unchanged, and meanings of only some unused bit values in a header type indicator field in the IFIT header are used to be compatible with an original IFIT protocol.

In conclusion, in embodiments of this application, the first IFIT detection packet includes the first IFIT header, and the first IFIT header includes the reporting manner indication information indicating that the detection result is reported by the egress node device. Therefore, after obtaining the first IFIT detection packet, the first network device can provide and process the second IFIT detection packet. The second IFIT detection packet is a detection packet obtained by adding the first device identifier and the first data flow detection result to the first IFIT detection packet. In other words, the detection result obtained by detecting the first data flow in the first period is reported only by the egress node device, and a node device on the transmission link of the first data flow includes, in a same IFIT detection packet, the detection result obtained by detecting the first data flow in the first period and sends the same IFIT detection packet to the egress node device. In this way, a quantity of reported packets can be reduced, consumed bandwidth is greatly reduced, and an amount of data that needs to be processed by the control device can be reduced, thereby improving a processing capability of the control device.

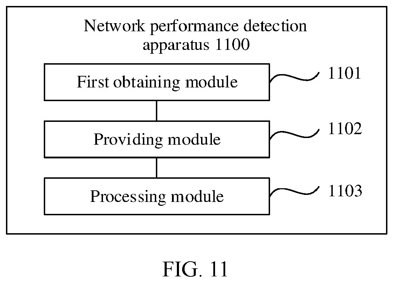

FIG. 11 is a schematic structural diagram of a network performance detection apparatus according to an embodiment of this application. The network performance detection apparatus 1100 may be implemented by software, hardware, or a combination of software and hardware to become a part or entirety of the network device. The network device may be the network device shown in FIG. 3. Refer to FIG. 11. The apparatus 1100 includes a first obtaining module 1101, a providing module 1102, and a processing module 1103.

The first obtaining module 1101 is configured to obtain a first IFIT detection packet, where the first IFIT detection packet includes a first IFIT header, the first IFIT header includes reporting manner indication information, and the reporting manner indication information indicates that a detection result is reported by an egress node device.

The providing module 1102 is configured to provide a second IFIT detection packet, where the second IFIT detection packet is a detection packet obtained by adding a first device identifier and a first data flow detection result to the first IFIT detection packet, the first device identifier is an identifier of the first network device, and the first data flow detection result is a detection result obtained by the first network device by detecting a first data flow in a first period.

The processing module 1103 is configured to process the second IFIT detection packet.

Optionally, the apparatus 1100 further includes:
a second obtaining module, configured to obtain a first data packet, where the first data packet includes a second IFIT header, the second IFIT header includes a detection task type, and the first data packet is a packet in the first data flow transmitted by the first network device in the first period;
a first determining module, configured to detect the first data packet based on the detection task type, to obtain a first packet detection result; and
a second determining module, configured to determine the first data flow detection result based on the first packet detection result.

Optionally, the first network device is an ingress node device, and the first IFIT detection packet is a detection packet generated by the first network device after the first period ends, or the first IFIT detection packet is a detection packet generated after the first network device receives a retransmission request sent by a control device, where the retransmission request is sent when the control device does not receive the first data flow detection result.

Optionally, the processing module 1103 includes:
a first sending module, configured to send the second IFIT detection packet to a second network device, where the second network device is a next-hop network device of the first network device.

Optionally, the first network device is an intermediate node device, the first IFIT detection packet further includes a second device identifier and a second data flow detection result, the second device identifier is an identifier of a second network device, the second network device is a previous-hop network device of the first network device, and the second data flow detection result is a detection result obtained by the second network device by detecting the first data flow in the first period.

The processing module 1103 includes:
a second sending module, configured to send the second IFIT detection packet to a third network device, where the third network device is a next-hop network device of the first network device.

Optionally, the first network device is the egress node device, the first IFIT detection packet further includes a second device identifier and a second data flow detection result, the second device identifier is an identifier of a second network device, the second network device is a previous-hop network device of the first network device, and the second data flow detection result is a detection result obtained by the second network device by detecting the first data flow in the first period; and
the first IFIT detection packet further includes a third device identifier and a third data flow detection result, the third device identifier is an identifier of a third network device, the third network device is an ingress node device, and the third data flow detection result is a detection result obtained by the third network device by detecting the first data flow in the first period.

Optionally, the processing module 1103 includes:
a third sending module, configured to send the first data flow detection result, the second data flow detection result, and the third data flow detection result to a control device.

Optionally, the processing module 1103 includes:
a determining submodule, configured to determine a performance detection result based on the first data flow detection result, the second data flow detection result, and the third data flow detection result, where the performance detection result indicates performance of transmitting the first data flow by the first network device, the second network device, and the third network device; and
a sending submodule, configured to send the performance detection result to a control device.

Optionally, when the detection task type is packet loss detection, the performance detection result includes one or more of a total quantity of lost node packets, a node packet loss rate, a total quantity of discarded node bytes, a node byte discarding rate, a total quantity of lost link packets, and a total quantity of discarded link bytes; and
the total quantity of lost node packets is a total quantity of data packets discarded by a corresponding node device in the first period, the node packet loss rate is a rate at which the corresponding node device discards the data packets in the first period, the total quantity of discarded node bytes is a total quantity of bytes discarded by the corresponding node device in the first period, the node byte discarding rate is a rate at which the corresponding node device discards the bytes in the first period, the total quantity of lost link packets is a total quantity of data packets discarded on a first transmission link in the first period, the total quantity of discarded link bytes is a total quantity of bytes discarded on the first transmission link in the first period, and the first transmission link is a transmission link of the first data flow.

Optionally, when the detection task type is delay detection, the performance detection result includes an average node delay and/or a link delay; and
the average node delay is average duration used by a corresponding node device from receiving a data packet to sending the data packet in the first period, the link delay is a sum of average node delays corresponding to various node devices on a first transmission link in the first period, and the first transmission link is a transmission link of the first data flow.

In this embodiment of this application, the first IFIT detection packet includes the first IFIT header, and the first IFIT header includes the reporting manner indication information indicating that the detection result is reported by the egress node device. Therefore, after obtaining the first IFIT detection packet, the first network device can provide and process the second IFIT detection packet. The second IFIT detection packet is a detection packet obtained by adding the first device identifier and the first data flow detection result to the first IFIT detection packet. In other words, the detection result obtained by detecting the first data flow in the first period is reported only by the egress node device, and a node device on the transmission link of the first data flow includes, in a same IFIT detection packet, the detection result obtained by detecting the first data flow in the first period and sends the same IFIT detection packet to the egress node device. In this way, a quantity of reported packets can be reduced, consumed bandwidth is greatly reduced, and an amount of data that needs to be processed by the control device can be reduced, thereby improving a processing capability of the control device.

It should be noted that when the network performance detection apparatus provided by the foregoing embodiment detects network performance, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above. In addition, the network performance detection apparatus provided in the foregoing embodiment and the embodiment of the network performance detection method belong to a same concept. For a specific implementation process of the network performance detection apparatus, refer to the method embodiment. Details are not described herein again.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that the computer-readable storage medium mentioned in this application may be a non-volatile storage medium. In other words, the computer-readable storage medium may be a non-transitory storage medium.

The foregoing descriptions are merely embodiments of this application, but are not intended to limit this application.

## Claims

1. A network performance detection method, wherein the method comprises:
obtaining (701), by a first network device, a first in-situ flow information telemetry, IFIT, detection packet, wherein the first IFIT detection packet comprises a first IFIT header, the first IFIT header comprises reporting manner indication information, and the reporting manner indication information indicates that a detection result is reported by an egress node device;
providing (702), by the first network device, a second IFIT detection packet; and
processing (703), by the first network device, the second IFIT detection packet,
**characterized in that**
the second IFIT detection packet is a detection packet obtained by adding a first device identifier and a first data flow detection result to the first IFIT detection packet, the first device identifier is an identifier of the first network device, and the first data flow detection result is a detection result obtained by the first network device by detecting a first data flow in a first period.

2. The method according to claim 1, wherein before the providing, by the first network device, a second IFIT detection packet, the method further comprises:
obtaining, by the first network device, a first data packet, wherein the first data packet comprises a second IFIT header, the second IFIT header comprises a detection task type, and the first data packet is a packet in the first data flow transmitted by the first network device in the first period;
detecting, by the first network device, the first data packet based on the detection task type, to obtain a first packet detection result; and
determining, by the first network device, the first data flow detection result based on the first packet detection result.

3. The method according to claim 1 or 2, wherein the first network device is the ingress node device, and the first IFIT detection packet is a detection packet generated by the first network device after the first period ends, or the first IFIT detection packet is a detection packet generated after the first network device receives a retransmission request sent by a control device, wherein the retransmission request is sent when the control device does not receive the first data flow detection result.

4. The method according to claim 3, wherein the processing, by the first network device, the second IFIT detection packet comprises:
sending, by the first network device, the second IFIT detection packet to a second network device, wherein the second network device is a next-hop network device of the first network device.

5. The method according to claim 1 or 2, wherein the first network device is an intermediate node device, the first IFIT detection packet further comprises a second device identifier and a second data flow detection result, the second device identifier is an identifier of a second network device, the second network device is a previous-hop network device of the first network device, and the second data flow detection result is a detection result obtained by the second network device by detecting the first data flow in the first period; and
the processing (703), by the first network device, the second IFIT detection packet comprises:
sending, by the first network device, the second IFIT detection packet to a third network device, wherein the third network device is a next-hop network device of the first network device.

6. The method according to claim 1 or 2, wherein the first network device is the egress node device, the first IFIT detection packet further comprises a second device identifier and a second data flow detection result, the second device identifier is an identifier of a second network device, the second network device is a previous-hop network device of the first network device, and the second data flow detection result is a detection result obtained by the second network device by detecting the first data flow in the first period; and
the first IFIT detection packet further comprises a third device identifier and a third data flow detection result, the third device identifier is an identifier of a third network device, the third network device is the ingress node device, and the third data flow detection result is a detection result obtained by the third network device by detecting the first data flow in the first period.

7. The method according to claim 6, wherein the processing, by the first network device, the second IFIT detection packet comprises:
sending, by the first network device, the first data flow detection result, the second data flow detection result, and the third data flow detection result to a control device.

8. The method according to claim 6, wherein the processing, by the first network device, the second IFIT detection packet comprises:
determining, by the first network device, a performance detection result based on the first data flow detection result, the second data flow detection result, and the third data flow detection result, wherein the performance detection result indicates performance of transmitting the first data flow by the first network device, the second network device, and the third network device; and
sending, by the first network device, the performance detection result to a control device.

9. The method according to claim 8, wherein when the detection task type is packet loss detection, the performance detection result comprises one or more of a total quantity of lost node packets, a node packet loss rate, a total quantity of discarded node bytes, a node byte discarding rate, a total quantity of lost link packets, and a total quantity of discarded link bytes; and
the total quantity of lost node packets is a total quantity of data packets discarded by a corresponding node device in the first period, the node packet loss rate is a rate at which the corresponding node device discards the data packets in the first period, the total quantity of discarded node bytes is a total quantity of bytes discarded by the corresponding node device in the first period, the node byte discarding rate is a rate at which the corresponding node device discards the bytes in the first period, the total quantity of lost link packets is a total quantity of data packets discarded on a first transmission link in the first period, the total quantity of discarded link bytes is a total quantity of bytes discarded on the first transmission link in the first period, and the first transmission link is a transmission link of the first data flow.

10. The method according to claim 8, wherein when the detection task type is delay detection, the performance detection result comprises an average node delay and/or a link delay; and
the average node delay is average duration used by a corresponding node device from receiving a data packet to sending the data packet in the first period, the link delay is a sum of average node delays corresponding to various node devices on a first transmission link in the first period, and the first transmission link is a transmission link of the first data flow.

11. A network performance detection apparatus, wherein the apparatus is applied to a first network device, the apparatus comprises:
a first obtaining module (1101), configured to obtain a first IFIT detection packet, wherein the first IFIT detection packet comprises a first IFIT header, the first IFIT header comprises reporting manner indication information, and the reporting manner indication information indicates that a detection result is reported by an egress node device;
a providing module (1102), configured to provide a second IFIT detection packet; and
a processing module (1103), configured to process the second IFIT detection packet,
**characterized in that**
the second IFIT detection packet is a detection packet obtained by adding a first device identifier and a first data flow detection result to the first IFIT detection packet, the first device identifier is an identifier of the first network device, and the first data flow detection result is a detection result obtained by the first network device by detecting a first data flow in a first period.

12. The apparatus according to claim 11, wherein the apparatus further comprises:
a second obtaining module, configured to obtain a first data packet, wherein the first data packet comprises a second IFIT header, the second IFIT header comprises a detection task type, and the first data packet is a packet in the first data flow transmitted by the first network device in the first period;
a first determining module, configured to detect the first data packet based on the detection task type, to obtain a first packet detection result; and
a second determining module, configured to determine the first data flow detection result based on the first packet detection result.

13. The apparatus according to claim 11 or 12, wherein the first network device is the ingress node device, and the first IFIT detection packet is a detection packet generated by the first network device after the first period ends, or the first IFIT detection packet is a detection packet generated after the first network device receives a retransmission request sent by a control device, wherein the retransmission request is sent when the control device does not receive the first data flow detection result.

14. The apparatus according to claim 13, wherein the processing module (1103) comprises:
a first sending module, configured to send the second IFIT detection packet to a second network device, wherein the second network device is a next-hop network device of the first network device.

## Patentansprüche

1. Netzwerkleistungserkennungsverfahren, wobei das Verfahren umfasst:
Erhalten (701), durch eine erste Netzwerkvorrichtung, eines ersten In-Situ-Flussinformationstelemetrie(IFIT)-Erkennungspakets, wobei das erste IFIT-Erkennungspaket einen ersten IFIT-Header umfasst, der erste IFIT-Header Berichtsart-Anzeigeinformationen umfasst und die Berichtsart-Anzeigeinformationen anzeigen, dass ein Erkennungsergebnis durch eine Ausgangsknotenvorrichtung berichtet wird;
Bereitstellen (702), durch die erste Netzwerkvorrichtung, eines zweiten IFIT-Erkennungspakets; und
Verarbeiten (703), durch die erste Netzwerkvorrichtung, des zweiten IFIT-Erkennungspakets,
**dadurch gekennzeichnet, dass**
das zweite IFIT-Erkennungspaket ein Erkennungspaket ist, das durch Hinzufügen einer ersten Vorrichtungskennung und eines ersten Datenflusserkennungsergebnisses zu dem ersten IFIT-Erkennungspaket erhalten wird, wobei die erste Vorrichtungskennung eine Kennung der ersten Netzwerkvorrichtung ist und das erste Datenflusserkennungsergebnis ein Erkennungsergebnis ist, das durch die erste Netzwerkvorrichtung durch Erkennen eines ersten Datenflusses in einem ersten Zeitraum erhalten wird.

2. Verfahren nach Anspruch 1, wobei vor dem Bereitstellen, durch eine erste Netzwerkvorrichtung, eines zweiten IFIT-Erkennungspakets das Verfahren ferner umfasst:
Erhalten, durch die erste Netzwerkvorrichtung, eines ersten Datenpakets, wobei das erste Datenpaket einen zweiten IFIT-Header umfasst, der zweite IFIT-Header einen Erkennungsaufgabentyp umfasst und das erste Datenpaket ein Paket in dem ersten Datenfluss ist, der durch die erste Netzwerkvorrichtung in dem ersten Zeitraum übertragen wird;
Erkennen, durch die erste Netzwerkvorrichtung, des ersten Datenpakets basierend auf dem Erkennungsaufgabentyp, um ein erstes Paketerkennungsergebnis zu erhalten; und
Bestimmen, durch die erste Netzwerkvorrichtung, des ersten Datenflusserkennungsergebnisses basierend auf dem ersten Paketerkennungsergebnis.

3. Verfahren nach Anspruch 1 oder 2, wobei die erste Netzwerkvorrichtung die Eingangsknotenvorrichtung ist und das erste IFIT-Erkennungspaket ein Erkennungspaket ist, das von der ersten Netzwerkvorrichtung nach dem Ende des ersten Zeitraums erzeugt wird, oder das erste IFIT-Erkennungspaket ein Erkennungspaket ist, das erzeugt wird, nachdem die erste Netzwerkvorrichtung eine von einer Steuervorrichtung gesendete Neuübertragungsanforderung empfängt, wobei die Neuübertragungsanforderung gesendet wird, wenn die Steuervorrichtung das erste Datenflusserkennungsergebnis nicht empfängt.

4. Verfahren nach Anspruch 3, wobei das Verarbeiten, durch die erste Netzwerkvorrichtung, des zweiten IFIT-Erkennungspakets umfasst:
Senden, durch die erste Netzwerkvorrichtung, des zweiten IFIT-Erkennungspakets an die zweite Netzwerkvorrichtung, wobei die zweite Netzwerkvorrichtung eine Next-Hop-Netzwerkvorrichtung der ersten Netzwerkvorrichtung ist.

5. Verfahren nach Anspruch 1 oder 2, wobei die erste Netzwerkvorrichtung eine Zwischenknotenvorrichtung ist, das erste IFIT-Erkennungspaket ferner eine zweite Vorrichtungskennung und ein zweites Datenflusserkennungsergebnis umfasst, die zweite Vorrichtungskennung eine Kennung einer zweiten Netzwerkvorrichtung ist, die zweite Netzwerkvorrichtung eine Previous-Hop-Netzwerkvorrichtung der ersten Netzwerkvorrichtung ist, und das zweite Datenflusserkennungsergebnis ein Erkennungsergebnis ist, das durch die zweite Netzwerkvorrichtung durch Erkennen des ersten Datenflusses in dem ersten Zeitraum erhalten wird; und
das Verarbeiten (703), durch die erste Netzwerkvorrichtung, des zweiten IFIT-Erkennungspakets umfasst:
Senden, durch die erste Netzwerkvorrichtung, des zweiten IFIT-Erkennungspakets an die dritte Netzwerkvorrichtung, wobei die dritte Netzwerkvorrichtung eine Next-Hop-Netzwerkvorrichtung der ersten Netzwerkvorrichtung ist.

6. Verfahren nach Anspruch 1 oder 2, wobei die erste Netzwerkvorrichtung die Ausgangsknotenvorrichtung ist, das erste IFIT-Erkennungspaket ferner eine zweite Vorrichtungskennung und ein zweites Datenflusserkennungsergebnis umfasst, die zweite Vorrichtungskennung eine Kennung einer zweiten Netzwerkvorrichtung ist, die zweite Netzwerkvorrichtung eine Previous-Hop-Netzwerkvorrichtung der ersten Netzwerkvorrichtung ist und das zweite Datenflusserkennungsergebnis ein Erkennungsergebnis ist, das durch die zweite Netzwerkvorrichtung durch Erkennen des ersten Datenflusses in dem ersten Zeitraum erhalten wird; und
das erste IFIT-Erkennungspaket ferner eine dritte Vorrichtungskennung und ein drittes Datenflusserkennungsergebnis umfasst, die dritte Vorrichtungskennung eine Kennung einer dritten Netzwerkvorrichtung ist, die dritte Netzwerkvorrichtung die Eingangsknotenvorrichtung ist, und das dritte Datenflusserkennungsergebnis ein Erkennungsergebnis ist, das durch die dritte Netzwerkvorrichtung durch Erkennen des ersten Datenflusses in dem ersten Zeitraum erhalten wird.

7. Verfahren nach Anspruch 6, wobei das Verarbeiten, durch die erste Netzwerkvorrichtung, des zweiten IFIT-Erkennungspakets umfasst:
Senden, durch die erste Netzwerkvorrichtung, des ersten
Datenflusserkennungsergebnisses, des zweiten Datenflusserkennungsergebnisses und des dritten Datenflusserkennungsergebnisses an eine Steuervorrichtung.

8. Verfahren nach Anspruch 6, wobei das Verarbeiten, durch die erste Netzwerkvorrichtung, des zweiten IFIT-Erkennungspakets umfasst:
Bestimmen, durch die erste Netzwerkvorrichtung, eines Leistungserkennungsergebnisses basierend auf dem ersten Datenflusserkennungsergebnis, dem zweiten Datenflusserkennungsergebnis und dem dritten Datenflusserkennungsergebnis, wobei das Leistungserkennungsergebnis eine Leistung des Übertragens des ersten Datenflusses durch die erste Netzwerkvorrichtung, die zweite Netzwerkvorrichtung und die dritte Netzwerkvorrichtung angibt; und
Senden, durch die erste Netzwerkvorrichtung, des Leistungserkennungsergebnisses an eine Steuervorrichtung.

9. Verfahren nach Anspruch 8, wobei, wenn der Erkennungsaufgabentyp eine Paketverlusterkennung ist, das Leistungserkennungsergebnis eines oder mehrere von einer Gesamtanzahl von verlorenen Knotenpaketen, einer Knotenpaketverlustrate, einer Gesamtanzahl von verworfenen Knotenbytes, einer Knotenbyteverwerfungsrate, einer Gesamtanzahl von verlorenen Verbindungspaketen und einer Gesamtanzahl von verworfenen Verbindungsbytes umfasst; und
die Gesamtanzahl von verlorenen Knotenpaketen eine Gesamtanzahl von Datenpaketen ist, die von einer entsprechenden Knotenvorrichtung in dem ersten Zeitraum verworfen werden, die Knotenpaketverlustrate eine Rate ist, mit der die entsprechende Knotenvorrichtung die Datenpakete in dem ersten Zeitraum verwirft, die Gesamtanzahl der verworfenen Knotenbytes eine Gesamtanzahl von Bytes ist, die von der entsprechenden Knotenvorrichtung in dem ersten Zeitraum verworfen werden, die Knotenbyteverwerfungsrate eine Rate ist, mit der die entsprechende Knotenvorrichtung die Bytes in dem ersten Zeitraum verwirft, die Gesamtanzahl von verlorenen Verbindungspaketen eine Gesamtanzahl von Datenpaketen ist, die auf der ersten Übertragungsverbindung in dem ersten Zeitraum verworfen werden, die Gesamtanzahl der verworfenen Verbindungsbytes eine Gesamtanzahl von Bytes ist, die auf der ersten Übertragungsverbindung in dem ersten Zeitraum verworfen werden, und die erste Übertragungsverbindung eine Übertragungsverbindung des ersten Datenflusses ist.

10. Verfahren nach Anspruch 8, wobei, wenn der Erkennungsaufgabentyp eine Verzögerungserkennung ist, das Leistungserkennungsergebnis eine durchschnittliche Knotenverzögerung und/oder eine Verbindungsverzögerung umfasst; und
die durchschnittliche Knotenverzögerung die durchschnittliche Dauer ist, die von einer entsprechenden Knotenvorrichtung vom Empfangen eines Datenpakets bis zum Senden des Datenpakets in dem ersten Zeitraum benötigt wird, die Verbindungsverzögerung eine Summe von durchschnittlichen Knotenverzögerungen ist, die verschiedenen Knotenvorrichtungen auf einer ersten Übertragungsverbindung in dem ersten Zeitraum entsprechen, und die erste Übertragungsverbindung eine Übertragungsverbindung des ersten Datenflusses ist.

11. Netzwerkleistungserkennungseinrichtung, wobei die Einrichtung auf eine erste Netzwerkvorrichtung angewendet wird und umfasst:
ein erstes Erhaltemodul (1101), das konfiguriert ist, um ein erstes IFIT-Erkennungspaket zu erhalten, wobei das erste IFIT-Erkennungspaket einen ersten IFIT-Header umfasst, der erste IFIT-Header Berichtsart-Anzeigeinformationen umfasst und die Berichtsart-Anzeigeinformationen anzeigen, dass ein Erkennungsergebnis durch eine Ausgangsknotenvorrichtung gemeldet wird;
ein Bereitstellungsmodul (1102), das konfiguriert ist, um ein zweites IFIT-Erkennungspaket bereitzustellen; und
ein Verarbeitungsmodul (1103), das konfiguriert ist, um das erste IFIT-Erkennungspaket zu verarbeiten,
**dadurch gekennzeichnet, dass**
das zweite IFIT-Erkennungspaket ein Erkennungspaket ist, das durch Hinzufügen einer ersten Vorrichtungskennung und eines ersten Datenflusserkennungsergebnisses zu dem ersten IFIT-Erkennungspaket erhalten wird, wobei die erste Vorrichtungskennung eine Kennung der ersten Netzwerkvorrichtung ist und das erste Datenflusserkennungsergebnis ein Erkennungsergebnis ist, das durch die erste Netzwerkvorrichtung durch Erkennen eines ersten Datenflusses in einem ersten Zeitraum erhalten wird.

12. Einrichtung nach Anspruch 11, wobei die Einrichtung ferner umfasst:
ein zweites Erhaltemodul, das konfiguriert ist, um ein erstes Datenpaket zu erhalten, wobei das erste Datenpaket einen zweiten IFIT-Header umfasst, der zweite IFIT-Header einen Erkennungsaufgabentyp umfasst und das erste Datenpaket ein Paket in dem ersten Datenfluss ist, der von der ersten Netzwerkvorrichtung in dem ersten Zeitraum übertragen wird;
ein erstes Bestimmungsmodul, das konfiguriert ist, um das erste Datenpaket basierend auf dem Erkennungsaufgabentyp zu erkennen, um ein erstes Paketerkennungsergebnis zu erhalten; und
ein zweites Bestimmungsmodul, das konfiguriert ist, um das erste Datenflusserkennungsergebnis basierend auf dem ersten Paketerkennungsergebnis zu bestimmen.

13. Einrichtung nach Anspruch 11 oder 12, wobei die erste Netzwerkvorrichtung die Eingangsknotenvorrichtung ist und das erste IFIT-Erkennungspaket ein Erkennungspaket ist, das von der ersten Netzwerkvorrichtung nach dem Ende des ersten Zeitraums erzeugt wird, oder das erste IFIT-Erkennungspaket ein Erkennungspaket ist, das erzeugt wird, nachdem die erste Netzwerkvorrichtung eine von einer Steuervorrichtung gesendete Neuübertragungsanforderung empfängt, wobei die Neuübertragungsanforderung gesendet wird, wenn die Steuervorrichtung das erste Datenflusserkennungsergebnis nicht empfängt.

14. Einrichtung nach Anspruch 13, wobei das Verarbeitungsmodul (1103) umfasst:
ein erstes Sendemodul, das konfiguriert ist, um das zweite IFIT-Erkennungspaket an die zweite Netzwerkvorrichtung zu senden, wobei die zweite Netzwerkvorrichtung eine Next-Hop-Netzwerkvorrichtung der ersten Netzwerkvorrichtung ist.

## Revendications

1. Procédé de détection de performance de réseau, dans lequel le procédé comprend :
l'obtention (701), par un premier dispositif de réseau, d'un premier paquet de détection de télémétrie d'informations de flux in situ, IFIT, dans lequel le premier paquet de détection IFIT comprend un premier en-tête IFIT, le premier en-tête IFIT comprend des informations d'indication de mode de rapport, et les informations d'indication de mode de rapport indiquent qu'un résultat de détection est rapporté par un dispositif de nœud de sortie ;
la fourniture (702), par le premier dispositif de réseau, d'un second paquet de détection IFIT ; et
le traitement (703), par le premier dispositif de réseau, du second paquet de détection IFIT,
**caractérisé en ce que**
le second paquet de détection IFIT est un paquet de détection obtenu en ajoutant un premier identifiant de dispositif et un premier résultat de détection de flux de données au premier paquet de détection IFIT, le premier identifiant de dispositif est un identifiant du premier dispositif de réseau, et le premier résultat de détection de flux de données est un résultat de détection obtenu par le premier dispositif de réseau en détectant un premier flux de données dans une première période.

2. Procédé selon la revendication 1, dans lequel avant la fourniture, par le premier dispositif de nœud, d'un second paquet de détection IFIT, le procédé comprend en outre :
l'obtention, par le premier dispositif de réseau, d'un premier paquet de données, dans lequel le premier paquet de données comprend un second en-tête IFIT, le second en-tête IFIT comprend un type de tâche de détection, et le premier paquet de données est un paquet dans le premier flux de données transmis par le premier dispositif de réseau dans la première période ;
la détection, par le premier dispositif de réseau, du premier paquet de données sur la base du type de tâche de détection, afin d'obtenir un premier résultat de détection de paquet ; et
la détermination, par le premier dispositif de réseau, du premier résultat de détection de flux de données sur la base du premier résultat de détection de paquet.

3. Procédé selon la revendication 1 ou 2, dans lequel le premier dispositif de réseau est le dispositif de nœud d'entrée, et le premier paquet de détection IFIT est un paquet de détection généré par le premier dispositif de réseau après la fin de la première période, ou le premier paquet de détection IFIT est un paquet de détection généré après la réception, par le premier dispositif de réseau, d'une demande de retransmission envoyée par un dispositif de commande, dans lequel la demande de retransmission est envoyée lorsque le dispositif de commande ne reçoit pas le premier résultat de détection de flux de données.

4. Procédé selon la revendication 3, dans lequel le traitement, par le premier dispositif de réseau, du second paquet de détection IFIT comprend :
l'envoi, par le premier dispositif de réseau, du second paquet de détection IFIT à un deuxième dispositif de réseau, dans lequel le deuxième dispositif de réseau est un dispositif de réseau de saut suivant du premier dispositif de réseau.

5. Procédé selon la revendication 1 ou 2, dans lequel le premier dispositif de réseau est un dispositif de nœud intermédiaire, le premier paquet de détection IFIT comprend en outre un deuxième identifiant de dispositif et un deuxième résultat de détection de flux de données, le deuxième identifiant de dispositif est un identifiant d'un deuxième dispositif de réseau, le deuxième dispositif de réseau est un dispositif de réseau de saut précédent du premier dispositif de réseau, et le deuxième résultat de détection de flux de données est un résultat de détection obtenu par le deuxième dispositif de réseau en détectant le premier flux de données dans la première période ; et
le traitement (703), par le premier dispositif de réseau, du second paquet de détection IFIT comprend :
l'envoi, par le premier dispositif de réseau, du second paquet de détection IFIT à un troisième dispositif de réseau, dans lequel le troisième dispositif de réseau est un dispositif de réseau de saut suivant du premier dispositif de réseau.

6. Procédé selon la revendication 1 ou 2, dans lequel le premier dispositif de réseau est le dispositif de nœud de sortie, le premier paquet de détection IFIT comprend en outre un deuxième identifiant de dispositif et un deuxième résultat de détection de flux de données, le deuxième identifiant de dispositif est un identifiant d'un deuxième dispositif de réseau, le deuxième dispositif de réseau est un dispositif de réseau de saut précédent du premier dispositif de réseau, et le deuxième résultat de détection de flux de données est un résultat de détection obtenu par le deuxième dispositif de réseau en détectant le premier flux de données dans la première période ; et
le premier paquet de détection IFIT comprend en outre un troisième identifiant de dispositif et un troisième résultat de détection de flux de données, le troisième identifiant de dispositif est un identifiant d'un troisième dispositif de réseau, le troisième dispositif de réseau est le dispositif de nœud d'entrée, et le troisième résultat de détection de flux de données est un résultat de détection obtenu par le troisième dispositif de réseau en détectant le premier flux de données dans la première période.

7. Procédé selon la revendication 6, dans lequel le traitement, par le premier dispositif de réseau, du second paquet de détection IFIT comprend :
l'envoi, par le premier dispositif de réseau, du premier résultat de détection de flux de données, du deuxième résultat de détection de flux de données et du troisième résultat de détection de flux de données à un dispositif de commande.

8. Procédé selon la revendication 6, dans lequel le traitement, par le premier dispositif de réseau, du second paquet de détection IFIT comprend :
la détermination, par le premier dispositif de réseau, d'un résultat de détection de performance sur la base du premier résultat de détection de flux de données, du deuxième résultat de détection de flux de données et du troisième résultat de détection de flux de données, dans lequel le résultat de détection de performance indique une performance de transmission du premier flux de données par le premier dispositif de réseau, le deuxième dispositif de réseau et le troisième dispositif de réseau ; et
l'envoi, par le premier dispositif de réseau, du résultat de détection de performance à un dispositif de commande.

9. Procédé selon la revendication 8, dans lequel, lorsque le type de tâche de détection est une détection de perte de paquet, le résultat de détection de performance comprend un ou plusieurs parmi une quantité totale de paquets de nœuds perdus, un taux de perte de paquets de nœuds, une quantité totale d'octets de nœuds rejetés, un taux de rejet d'octets de nœud, une quantité totale de paquets de liaison perdus et une quantité totale d'octets de liaison rejetés ; et
la quantité totale de paquets de nœuds perdus est une quantité totale de paquets de données rejetés par un dispositif de nœud correspondant dans la première période, le taux de perte de paquets de nœuds est un taux auquel le dispositif de nœud correspondant rejette les paquets de données dans la première période, la quantité totale d'octets de nœud rejetés est une quantité totale d'octets rejetés par le dispositif de nœud correspondant dans la première période, le taux de rejet d'octets de nœud est un taux auquel le dispositif de nœud correspondant rejette les octets dans la première période, la quantité totale de paquets de liaison perdus est une quantité totale de paquets de données rejetés sur une première liaison de transmission dans la première période, la quantité totale d'octets de liaison rejetés est une quantité totale d'octets rejetés sur la première liaison de transmission dans la première période, et la première liaison de transmission est une liaison de transmission du premier flux de données.

10. Procédé selon la revendication 8, dans lequel, lorsque le type de tâche de détection est une détection de retard, le résultat de détection de performance comprend un retard moyen de nœud et/ou un retard de liaison ; et
le retard moyen de nœud est une durée moyenne utilisée par un dispositif de nœud correspondant entre la réception d'un paquet de données et l'envoi du paquet de données dans la première période, le retard de liaison est une somme des retards moyens de nœud correspondant à divers dispositifs de nœud sur une première liaison de transmission dans la première période, et la première liaison de transmission est une liaison de transmission du premier flux de données.

11. Appareil de détection de performance de réseau, dans lequel l'appareil est appliqué à un premier dispositif de réseau, l'appareil comprend :
un premier module d'obtention (1101), configuré pour obtenir un premier paquet de détection IFIT, dans lequel le premier paquet de détection IFIT comprend un premier en-tête IFIT, le premier en-tête IFIT comprend des informations d'indication de mode de rapport, et les informations d'indication de mode de rapport indiquent qu'un résultat de détection est rapporté par un dispositif de nœud de sortie ;
un module de fourniture (1102), configuré pour fournir un second paquet de détection IFIT ; et
un module de traitement (1103), configuré pour traiter le second paquet de détection IFIT, **caractérisé en ce que**
le second paquet de détection IFIT est un paquet de détection obtenu en ajoutant un premier identifiant de dispositif et un premier résultat de détection de flux de données au premier paquet de détection IFIT, le premier identifiant de dispositif est un identifiant du premier dispositif de réseau, et le premier résultat de détection de flux de données est un résultat de détection obtenu par le premier dispositif de réseau en détectant un premier flux de données dans une première période.

12. Appareil selon la revendication 11, dans lequel l'appareil comprend en outre :
un second module d'obtention, configuré pour obtenir un premier paquet de données, dans lequel le premier paquet de données comprend un second en-tête IFIT, le second en-tête IFIT comprend un type de tâche de détection, et le premier paquet de données est un paquet dans le premier flux de données transmis par le premier dispositif de réseau dans la première période ;
un premier module de détermination, configuré pour détecter le premier paquet de données sur la base du type de tâche de détection, afin d'obtenir un premier résultat de détection de paquet ; et
un second module de détermination, configuré pour déterminer le premier résultat de détection de flux de données sur la base du premier résultat de détection de paquet.

13. Appareil selon la revendication 11 ou 12, dans lequel le premier dispositif de réseau est le dispositif de nœud d'entrée, et le premier paquet de détection IFIT est un paquet de détection généré par le premier dispositif de réseau après la fin de la première période, ou le premier paquet de détection IFIT est un paquet de détection généré après la réception, par le premier dispositif de réseau, d'une demande de retransmission envoyée par un dispositif de commande, dans lequel la demande de retransmission est envoyée lorsque le dispositif de commande ne reçoit pas le premier résultat de détection de flux de données.

14. Appareil selon la revendication 13, dans lequel le module de traitement (1103) comprend :
un premier module d'envoi, configuré pour envoyer le second paquet de détection IFIT à un deuxième dispositif de réseau, dans lequel le deuxième dispositif de réseau est un dispositif de réseau de saut suivant du premier dispositif de réseau.
